# EUROPEAN PATENT APPLICATION

(11) **EP 4 438 221 A1**
(43) Date of publication of application: **02.10.2024**
(21) Application number: 21965572.7
(22) Date of filing: 24.11.2021
(51) Int. Cl.: B23K 26/359

(54) **PROCESSING DEVICE AND PROCESSING METHOD**

(71) Applicant: NIKON CORPORATION, Minato-ku Tokyo 108-6290 (JP)
(72) Inventor: KAWABE, Yoshio, Tokyo 108-6290 (JP); OZAWA, Toshihiko, Tokyo 108-6290 (JP)
(74) Representative: Hoffmann Eitle
(86) International application number: PCT/JP2021/042957
(87) International publication number: WO 2023/095198

(57) **Abstract**

A processing apparatus is a processing apparatus that performs a riblet processing on a surface of an object by using light from a light source, and includes: a first optical system that forms an interference fringe on the surface of the object by irradiating the object with a plurality of processing lights, which are generated by dividing the light from the light source, from different incident directions, respectively; and a second optical system that adjusts a shape of a riblet, which is formed on the surface of the object, by providing at least one difference of a difference in intensity, a difference in phase and a difference in polarization between at least two processing lights, with which the object is irradiated, among the plurality of processing lights.

## Description

### Technical Field

The present invention relates to a processing apparatus and a processing method that processes an object, for example.

### Background Art

A Patent Literature 1 discloses a processing apparatus that is configured to process an object so that a riblet is formed on a surface of the object such as an airframe of an airplane. This type of processing apparatus is required to properly process the object.

### Citation List

### Patent Literature

Patent Literature 1: US6,545,248B

### Summary of Invention

A first aspect provides a processing apparatus that performs a riblet processing on a surface of an object by using light from a light source, the processing apparatus includes: a first optical system that forms an interference fringe on the surface of the object by irradiating the object with a plurality of processing lights, which are generated by dividing the light from the light source, from different incident directions, respectively; and a second optical system that adjusts a shape of a riblet, which is formed on the surface of the object, by providing at least one difference of a difference in intensity, a difference in phase and a difference in polarization between at least two processing lights, with which the object is irradiated, among the plurality of processing lights.

A second aspect provides a processing method of performing a riblet processing on a surface of an object by using light from a light source, the processing method includes: generating a plurality of processing lights by dividing the light from the light source; irradiating the object with the plurality of processing lights from different incident directions, respectively; forming an interference fringe on the surface of the object; and adjusting a shape of a riblet, which is formed on the surface of the object, by providing at least one difference of a difference in intensity, a difference in phase and a difference in polarization between at least two processing lights, with which the object is irradiated, among the plurality of processing lights.

### Brief Description of Drawings

[FIG. 1] FIG. 1 is a cross-sectional view that illustrates an entire configuration of a processing system in a present example embodiment.
[FIG. 2] FIG. 2 is a system configuration diagram that illustrates a system configuration of the processing system in the present example embodiment.
[FIG. 3] FIG. 3A is a perspective view that illustrates a riblet structure, FIG. 3B is a cross-sectional view that illustrates the riblet structure (a III-III' cross-sectional view in FIG. 3A), and FIG. 3C is a top view that illustrates the riblet structure.
[FIG. 4] FIG. 4 is a plan view that illustrates one example of an interference fringe.

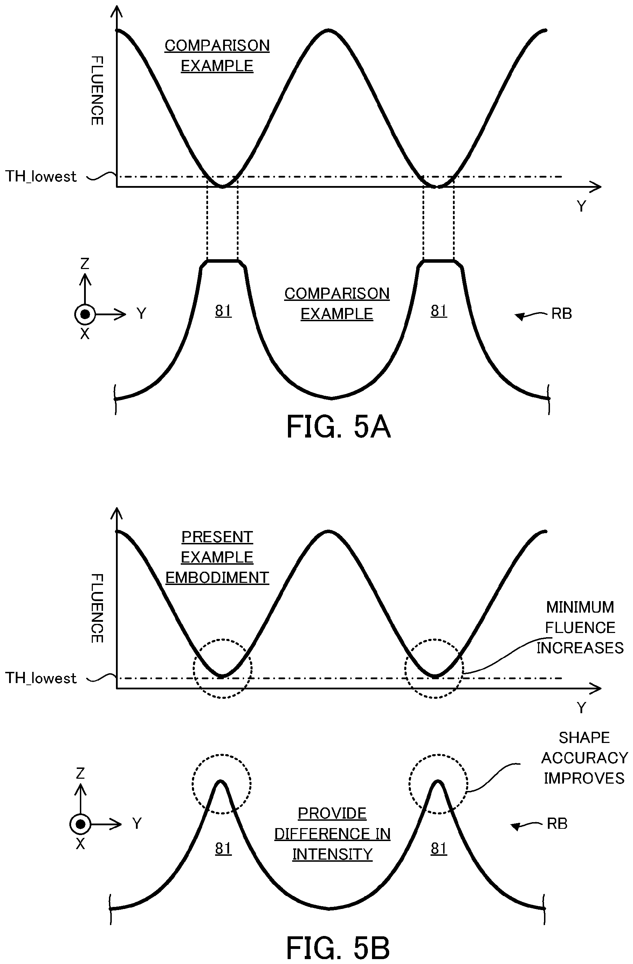

[FIG. 5] FIG. 5A illustrates a fluence distribution of interference light in a comparison example in which a difference in optical characteristic between at least two processing lights is not provided and a shape of a cross-section of the riblet structure formed by the interference light in the comparison example, and FIG. 5B illustrates a fluence distribution of the interference light in the present example embodiment in which the difference in optical characteristic between at least two processing lights is not provided and a shape of a cross-section of the riblet structure formed by the interference light in the present example embodiment.
[FIG. 6] FIG. 6 is a graph illustrating a relationship between the fluence of the light and a processing amount of a workpiece.
[FIG. 7] FIG. 7 illustrates the fluence distribution of the interference light in the comparison example in which the difference in optical characteristic between at least two processing lights is not provided and the shape of the cross-section of the riblet structure formed by the interference light in the comparison example.
[FIG. 8] FIG. 8 illustrates the fluence distribution of the interference light in the present example embodiment in which the difference in optical characteristic between at least two processing lights is not provided and the shape of the cross-section of the riblet structure formed by interference light in the present example embodiment.
[FIG. 9] FIG. 9 is a cross-sectional view that illustrates a configuration of a processing optical system that provides a difference in intensity between at least two processing lights.
[FIG. 10] FIG. 10 is a graph that illustrates intensities of two processing lights.
[FIG. 11] FIG. 11 illustrates the fluence distribution of the interference light generated through the processing optical system illustrated in FIG. 9 and the shape of the cross-section of the riblet structure formed by using the processing optical system illustrated in FIG. 9.
[FIG. 12] FIG. 12 is a cross-sectional view that illustrates a configuration of a processing optical system that provides a difference in phase between at least two processing lights.
[FIG. 13] FIG. 13 illustrates the fluence distribution of the interference light generated through the processing optical system illustrated in FIG. 12 and the shape of the cross-section of the riblet structure formed by using the processing optical system illustrated in FIG. 12.
[FIG. 14] FIG. 14 is a cross-sectional view that illustrates a configuration of a processing optical system that provides a difference in polarization between at least two processing lights.
[FIG. 15] FIG. 15 illustrates the fluence distribution of the interference light generated through the processing optical system illustrated in FIG. 14 and the shape of the cross-section of the riblet structure formed by using the processing optical system illustrated in FIG. 14.
[FIG. 16] FIG. 16 illustrates a trajectory of an end point of electromagnetic field vectors of two processing lights satisfying a first polarization condition.
[FIG. 17] FIG. 17 illustrates a trajectory of an end point of electromagnetic field vectors of two processing lights satisfying a second polarization condition.
[FIG. 18] FIG. 18 illustrates a trajectory of an end point of electromagnetic field vectors of two processing lights satisfying a third polarization condition.
[FIG. 19] FIG. 19 is a cross-sectional view that illustrates a configuration of a first modified example of the processing optical system that provides the difference in intensity between at least two processing lights.
[FIG. 20] FIG. 20 is a cross-sectional view that illustrates a configuration of a second modified example of the processing optical system that provides the difference in intensity between at least two processing lights.
[FIG. 21] FIG. 21 illustrates the fluence distribution of the interference light generated through the modified example of the processing optical system that provides the difference in intensity between at least two processing lights and the shape of the cross-section of the riblet structure formed by this interference light.
[FIG. 22] FIG. 22 is a cross-sectional view that illustrates a configuration of a modified example of the processing optical system that provides the difference in polarization between at least two processing lights.
[FIG. 23] FIG. 23 is a system configuration diagram that illustrates a system configuration of a processing system in a first modified example.
[FIG. 24] FIG. 24 illustrates an intensity distribution of the processing light before an illumination optical system changes an intensity distribution, and an intensity distribution of the processing light after the illumination optical system changes the intensity distribution,
[FIG. 25] FIG. 25 is a cross-sectional view that illustrates a configuration of a first illumination optical system in the first modified example.
[FIG. 26] FIG. 26 illustrates the intensity distribution of the processing light in a case where the first illumination optical system in the first modified example changes the intensity distribution of the processing light.
[FIG. 27] FIG. 27 is a cross-sectional view that illustrates a configuration of a second illumination optical system in the first modified example.
[FIG. 28] FIG. 28 illustrates the intensity distribution of the processing light in a case where the second illumination optical system in the first modified example changes the intensity distribution of the processing light.
[FIG. 29] FIG. 29 is a system configuration diagram that illustrates another example of the system configuration of the processing system in the first modified example.
[FIG. 30] FIG. 30 is a system configuration diagram that illustrates a system configuration of a processing system in a second modified example.
[FIG. 31] FIG. 31 illustrates one example of a cooling apparatus that uses gas as a refrigerant.
[FIG. 32] FIG. 32 illustrates one example of a cooling apparatus that uses liquid as a refrigerant.

### Example Embodiments

Next, with reference to drawings, an example embodiment of a processing apparatus and a processing method will be described. In the below described description, the example embodiment of the processing apparatus and the processing method will be described by using a processing system SYS that is configured to process a workpiece W that is one example of an object. However, the present invention is not limited to the below described embodiment.

Moreover, in the below described description, a positional relationship of various components that constitute the processing system SYS will be described by using an XYZ rectangular coordinate system that is defined by a X-axis, a Y-axis and a Z-axis that are perpendicular to one another. Note that each of an X-axis direction and a Y-axis direction is assumed to be a horizontal direction (namely, a predetermined direction in a horizontal plane) and a Z-axis direction is assumed to be a vertical direction (namely, a direction that is perpendicular to the horizontal plane, and substantially an up-down direction), for the purpose of simple description, in the below described description. Moreover, rotational directions (in other words, inclination directions) around the X-axis, the Y-axis and the Z-axis are referred to as a θX direction, a θY direction and a θZ direction, respectively. Here, the Z-axis direction may be a gravity direction. An XY plane may be a horizontal direction.

### (1) Configuration of Processing System SYS

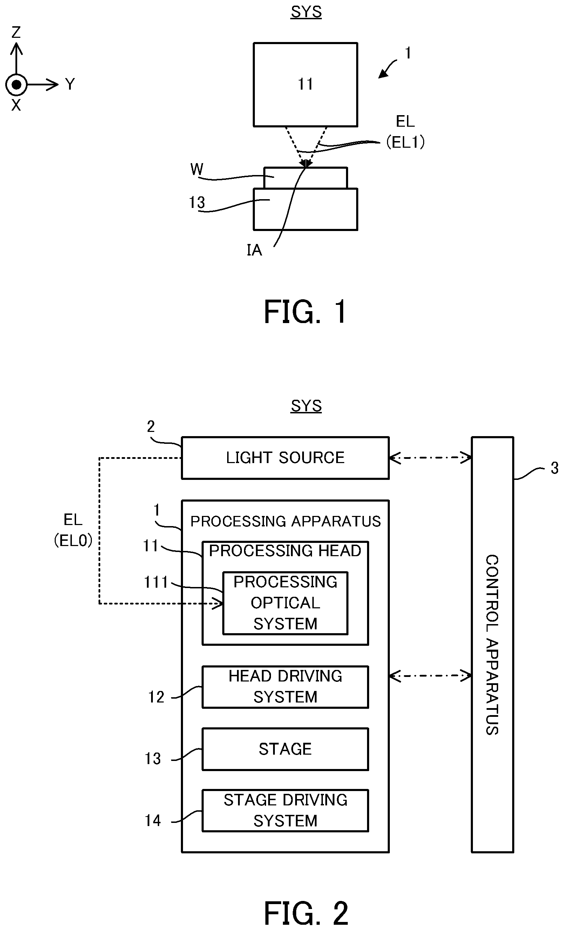

Firstly, with reference to FIG. 1 and FIG. 2, a configuration of the processing system SYS in a present example embodiment will be described. FIG. 1 is a cross-sectional view that schematically illustrates the configuration of the processing system SYS in the present example embodiment. FIG. 2 is a system configuration diagram that illustrates a system configuration of the processing system SYS in the present example embodiment.

As illustrated in FIG. 1 and FIG. 2, the processing system SYS includes a processing apparatus 1, a processing light source 2 (not illustrated in FIG. 1), and a control apparatus 3 (not illustrated in FIG. 1).

The processing apparatus 1 is configured to process the workpiece W, which is a processing target object (it may be referred to as a base member), under the control of the control apparatus 3. The workpiece W may be a metal, may be an alloy (for example, a duralumin and the like), may be a semiconductor (for example, a silicon), may be a resin, may be a composite material such as a CFRP (Carbon Fiber Reinforced Plastic), a painting material (as one example, a painting layer that coats a base material), may be a glass or may be an object that is made from any other material, for example.

A surface of the workpiece W may be coated with a coat of material that is different from the workpiece W. In this case, a surface of the coat coating the surface of the workpiece W may be a surface that is to be processed by the processing apparatus 1. Even in this case, the processing apparatus 1 may be considered to process the workpiece W (namely, process the workpiece W coated with the coat).

The processing apparatus 1 irradiates the workpiece W with processing light EL in order to process the workpiece W. The processing light EL may be any type of light, as long as the workpiece W is processed by irradiating the workpiece W with it. In the present example embodiment, an example in which the processing light EL is laser light will be described, however, the processing light EL may be light that is different from the laser light. Furthermore, a wavelength of the processing light EL may be any wavelength, as long as the workpiece W is processed by irradiating the workpiece W with it. For example, the processing light EL may be visible light, or may be invisible light (for example, at least one of infrared light, ultraviolet light, extreme ultraviolet light and the like). The processing light EL may include pulsed light (for example, pulsed light an ON time of which is equal to or shorter than pico-seconds). Alternatively, the processing light EL may not include the pulsed light. In other words, the processing light EL may be continuous light.

The processing light EL is transmitted from the processing light source 2, which generates the processing light L, to the processing apparatus 1 through a non-illustrated light transmitting member (for example, at least one of an optical fiber and a mirror). In a case where the processing light EL is the laser light as described above, the processing light source 2 may include a laser light source (for example, a semiconductor laser such as a Laser Diode (LD)). The laser light source may include at least one of a fiber laser, a CO₂ laser, a YAG laser, an Excimer laser and the like. However, in a case where the processing light EL is not the laser light, the processing light source 2 may include any light source (for example, at least one of a LED (Light Emitting Diode), a discharge lamp and the like).

The processing apparatus 1 may perform a removal processing for removing a part of the workpiece W by irradiating the workpiece W with the processing light EL. For example, the processing apparatus 1 may performs the removal processing for removing a part of the workpiece W by using a principle of a thermal processing. Specifically, when the surface of the workpiece W is irradiated with the processing light EL, an energy of the processing light EL is transmitted to an irradiated part of the workpiece W that is irradiated with the processing light EL and an vicinity part of the workpiece W that is in the vicinity of the irradiated part. When a heat caused by the energy of the processing light EL is transmitted, a material constituting the irradiated part and the vicinity part of the workpiece W is melted due to the heat caused by the energy of the processing light EL. The melted material spatters as liquid drop. Alternatively, the melted material evaporates due to the heat caused by the energy of the processing light EL. As a result, the irradiated part and the vicinity part of the workpiece W is removed. Incidentally, in a case where the thermal processing is performed, the processing light EL may include the pulsed light an ON time of which is equal to or longer than milli-seconds or the continuous light.

On the other hand, the processing apparatus 1 may perform the removal processing for removing a part of the workpiece W by using a principle of non-thermal processing (for example, an ablation processing) depending on a characteristic of the processing light EL. Namely, the processing apparatus 1 may perform the non-thermal processing (for example, the ablation processing) on the workpiece W. For example, in a case where the light whose photon density (in other words, fluence) is high is used as the processing light EL, the material constituting the irradiated part and the vicinity part of the workpiece W instantly evaporates and spatters. Namely, the material constituting the irradiated part and the vicinity part of the workpiece W evaporates and spatters within a time sufficiently shorter than a thermal diffusion time of the workpiece W. In this case, the material constituting the irradiated part and the vicinity part of the workpiece W may be released from the workpiece W as at least one of ion, atom, radical, molecule, cluster and solid piece. Incidentally in a case where the non-thermal processing is performed, the processing light EL may include the pulsed light the ON time of which is equal to or shorter than pico-seconds (alternatively, is equal to or shorter than nano-seconds or femto-seconds, in some case). In a case where the pulsed light the ON time of which is equal to or shorter than pico-seconds (alternatively, is equal to or shorter than nano-seconds or femto-seconds, in some case) is used as the processing light EL, the material constituting the irradiated part and the vicinity part of the workpiece W may sublimate without going through a molten state. Therefore, it is possible to process the workpiece W while reducing an effect of the heat caused by the energy of the processing light EL on the workpiece W as much as possible.

In the present example embodiment, the processing apparatus 1 may form a riblet structure RB on the surface of the workpiece W by performing the removal processing. The processing for forming the riblet structure RB may be referred to as a riblet processing. Namely, the processing apparatus 1 may perform the riblet processing on the workpiece W.

The riblet structure RB may include a concave and convex structure by which a resistance (especially, at least one of a frictional resistance and a turbulent frictional resistance) of the surface of the workpiece W to fluid is reducible. Therefore, the riblet structure RB may be formed on the workpiece W having a member that is placed (in other words, located) in the fluid. In other words, the riblet structure RB may be formed on the workpiece W having a member that relatively moves relative to the fluid. Note that the fluid here means any medium (for example, at least one of gas and liquid) that flows relative to the surface of the workpiece W. For example, the medium may be referred to as the fluid in the case where the surface of workpiece W moves relative to the medium although the medium itself is static. Note that a state where the medium is static may mean a state where the medium does not move relative to a predetermined reference object (for example, a ground surface).

In a case where the riblet structure RB, which includes the structure by which the resistance (especially, at least one of the frictional resistance and the turbulent frictional resistance) of the surface of the workpiece W to the fluid is reducible, is formed on the workpiece W, the workpiece W is movable relative to the fluid more easily. Therefore, the resistance that prevents the workpiece W from moving relative to the fluid is reduced, and thereby an energy saving is achievable. Namely, it is possible to manufacture the environmentally preferable workpiece W. For example, a turbine blade that may be referred to as a rotor blade is an example of the workpiece W that relatively moves relative to the fluid. In a case where the riblet structure RB is formed on the turbine blade, the resistance that prevents the turbine blade from moving (typically, rotating) is reduced, and thereby an energy saving of an apparatus (for example, a turbine) using the turbine blade is achievable. Namely, it is possible to manufacture the environmentally preferable turbine blade (the turbine).

Note that the riblet structure RB may be formed on the workpiece W that is different from the turbine blade. At least one of a turbine vane, which may be referred to as a static blade, a fan, an impeller, a propeller, and a pump is one example of the workpiece W on which the riblet structure RB is formed. The fan is a member (typically, a rotatable body) that is used in a blower or the like and that forms a flow of gas. The impeller is a member that is used in a pump and that is a rotational blade rotatable so as to generate force to pump (alternatively, suck) the fluid by the pump, for example. The propeller is a member (typically a rotatable body) that converts rotational force outputted from a prime mover including at least one of an engine and a motor into driving force for a movable object including at least one of an airplane, a ship and the like, for example. A body (for example, an airframe or a hull) of the movable object including at least one of the airplane, the ship and so on is another example of the workpiece W on which the riblet structure RB is formed.

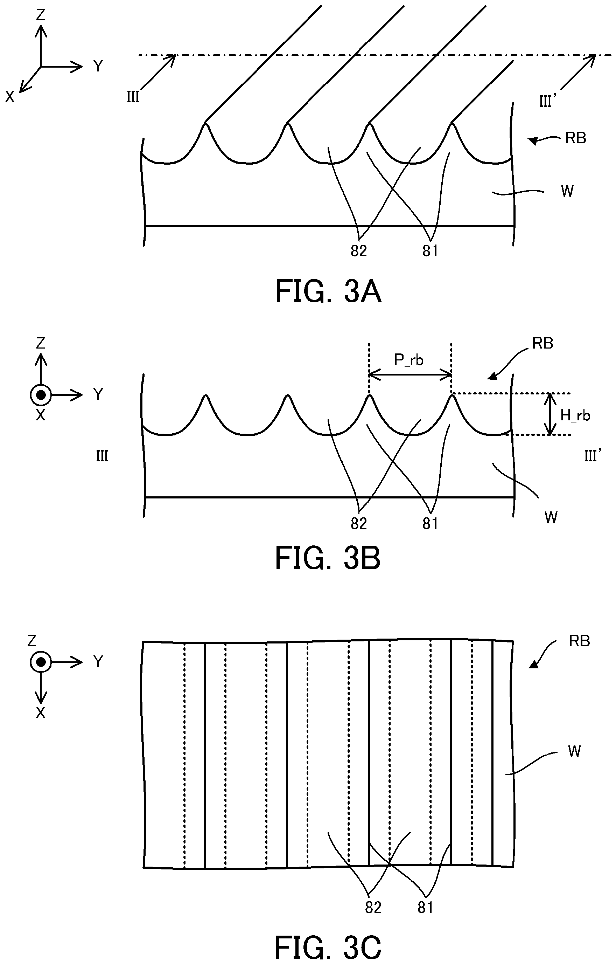

Here, with reference to FIG. 3A to FIG. 3B, the riblet structure RB will be described. FIG. 3A is a perspective view that illustrates the riblet structure RB, FIG. 3B is a cross-sectional view that illustrates the riblet structure RB (a III-III' cross-sectional view in FIG. 3A), and FIG. 3C is a top view that illustrates the riblet structure RB.

As illustrated in FIG. 3A to FIG. 3C, the riblet structure RB may include a structure in which a plurality of convex structures 81, each of which extends along a first direction that is along the surface of the workpiece W, are arranged along a second direction that is along the surface of the workpiece W and that intersects the first direction. Namely, the riblet structure RB may include a structure in which the plurality of convex structures 81, each of which is formed to extend along the first direction, are arranged along the second direction. In an example illustrated in FIG. 3A to FIG. 3C, the riblet structure RB includes a structure in which the plurality of convex structures 81, each of which extends along the X-axis direction, are arranged along the Y-axis direction.

The convex structure 81 is a structure that protrudes along a direction that intersects both of a direction along which the convex structure 81 extends and a direction along which the convex structures 81 are arranged. In the example illustrated in FIG. 3A to FIG. 3C, the convex structure 81 is a structure that protrudes along the Z-axis direction. Note that the convex structure 81 may include a protrusion-shaped structure that projects against the surface of the workpiece W. The convex structure 8 may include a convex-shaped structure that is convex with respect to the surface of the workpiece W. The convex structure 8 may include a mountain-shaped structure that is a peak relative to the surface of the workpiece W.

A groove structure 82, which is depressed relative to the surrounding thereof, is formed between adjacent convex structures 81. Thus, the riblet structure RB may include a structure in which a plurality of groove structures 82, each of which extends along the first direction that is along the surface of the workpiece W, are arranged along the second direction that is along the surface of the workpiece W and that intersects the first direction. Namely, the riblet structure RB may include a structure in which the plurality of groove structures 82, each of which is formed to extend along the first direction, are arranged along the second direction. In the example illustrated in FIG. 3A to FIG. 3C, the riblet structure RB includes a structure in which the plurality of groove structures 82, each of which extends along the X-axis direction, are arranged along the Y-axis direction. Note that the groove structure 82 may be referred to as a groove-shaped structure.

Incidentally, the convex structure 81 may be regarded as a structure that protrudes from the groove structure 82. The convex structure 81 may be regarded as a structure that forms at least one of a protrusion-shaped structure, a convex-shaped structure, and a mountain-shaped structure between two adjacent groove structures 82. The groove structure 82 may be regarded as a structure depressed from the convex structure 81. The groove structure 82 may be regarded as a structure that forms a groove-shaped structure between two adjacent convex structures 81.

A height H_rb of at least one of the plurality of convex structures 81 may be set to be a height determined based on a pitch P_rb of the convex structures 81. For example, the height H_rb of at least one of the plurality of convex structures 81 may be equal to or smaller than the pitch P_rb of the convex structures 81. For example, the height H_rb of at least one of the plurality of convex structures 81 may be equal to or smaller than a half of the pitch P_rb of the convex structures 81. As one example, the pitch P_rb of the convex structures 81 may be larger than 5 micrometers and smaller than 200 micrometers. In this case, the height H_rb of at least one of the plurality of convex structures 81 may be larger than 2.5 micrometers and smaller than 100 micrometers.

Again in FIG. 1 and FIG. 2, in order to process the workpiece W, the processing apparatus 1 includes a processing head 11, a head driving system 12, a stage 13, and a stage driving system 14.

The processing head 11 irradiates the workpiece W with processing light EL from the processing light source 2. In order to irradiate the workpiece W with the processing light EL, the processing head 11 includes a processing optical system 111. The processing head 11 irradiates the workpiece W with the processing light EL through the processing optical system 111.

In the present example embodiment, the processing optical system 111 may form the riblet structure RB on the surface of the workpiece W by forming interference fringe IS on the surface of the workpiece W. Specifically, the processing optical system 111 irradiates the workpiece W with a plurality of processing lights EL (in the example illustrated in FIG. 1, two processing lights EL), which are generated by dividing the processing light EL from the processing light source 2, from different incident directions, respectively. As a result, interference light is generated by an interference between the plurality of processing lights EL. In this case, the processing optical system 111 may be considered to substantially irradiate the workpiece W with the interference light generated by the interference between the plurality of processing lights EL. As a result, the interference fringe IS caused by the interference light is formed on the surface of the workpiece W. Incidentally, in the below-described description, the processing light EL generated by the processing light source 2 is referred to as "processing light EL0" and the processing light EL with which the workpiece W is irradiated by the processing optical system 111 is referred to as "processing light EL1" to distinguish these two lights from each other. The processing light EL1 generated by the processing optical system 111 dividing the processing light EL0 may be referred to as "divided light". Moreover, a detailed structure of the processing optical system 111 will be described in detail later with reference to FIG. 5 and so on, and therefore it is omitted here.

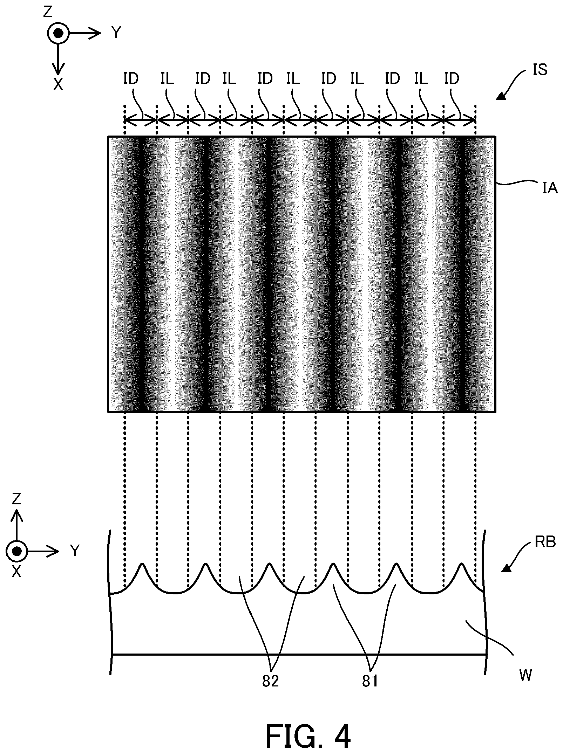

One example of the interference fringe IS is illustrated in FIG. 4. As illustrated in FIG. 4, the interference fringe IS may be fringe including a bright part IL and a dark part ID. The bright part IL may include a part of the interference fringe IS at which a fluence is larger (namely, higher) than a predetermined amount. The bright part IL may include a part that is irradiated with light part, the fluence of which is larger than the predetermined amount, of the interference light forming the interference fringe IS. The dark part ID may include a part of the interference fringe IS at which the fluence is smaller (namely, lower) than the predetermined amount. The dark part ID may include a part that is irradiated with light part, the fluence of which is smaller than the predetermined amount, of the interference light forming the interference fringe IS. Moreover, the fluence in the bright part IL may be larger than the fluence in the dark part ID.

FIG.4 further illustrates a relationship between the interference fringe IS and the riblet structure RB. As illustrated in FIG. 4, the bright part IL may be used mainly to form the above-described groove structure 82. In this case, the processing optical system 111 may form the groove structure 82 included in the riblet structure RB on the surface of the workpiece W by forming the bright part IL included in the interference fringe IS on the surface of the workpiece W to remove a part of the workpiece W. The processing optical system 111 may form the groove structure 82 on the surface of the workpiece W by irradiating the surface of the workpiece W with the light part of the interference light forming the bright part IL to remove a part of the workpiece W. The processing optical system 111 may form the groove structure 82 on the surface of the workpiece W by using the processing light EL1 that reaches the bright part IL (namely, by using the light part of the processing light EL1 that reaches the bright part IL) to remove a part of the workpiece W. In this case, the interference fringe IS may include a fringe in which a plurality of bright parts IL, each of which extends along the direction in which the groove structure 82 extends (in the example illustrated in FIG. 4, the X-axis direction), are arranged along the direction in which the groove structures 82 are arranged (in the example illustrated in FIG. 4, the Y-axis direction). Namely, the interference fringe IS may include a fringe in which a plurality of bright parts IL, each of which extends along the direction in which the groove structure 82 extends (in the example illustrated in FIG. 4, the X-axis direction), are aligned along the direction in which the groove structures 82 are arranged (in the example illustrated in FIG. 4, the Y-axis direction).

As illustrated in FIG. 4, the dark parts ID may be used mainly to form the above-described convex structure 81. In this case, the processing optical system 111 may form the convex structure 81 included in the riblet structure RB on the surface of the workpiece W by forming the dark part ID included in the interference fringe IS to remove a part of the workpiece W (alternatively, not to remove a part of the workpiece W in some cases). The processing optical system 111 may form the convex structure 81 on the surface of the workpiece W by irradiating the surface of the workpiece W with the light part of the interference light forming the dark part ID to remove a part of the workpiece W. The processing optical system 111 may form the convex structure 81 on the surface of the workpiece W by using the processing light EL1 that reaches the dark part ID (namely, by using the light part of the processing light EL1 that reaches the dark part ID) to remove a part of the workpiece W. In this case, the interference fringe IS may include a fringe in which a plurality of dark parts ID, each of which extends along the direction in which the convex structure 81 extends (in the example illustrated in FIG. 4, the X-axis direction), are arranged along the direction in which the convex structures 81 are arranged (in the example illustrated in FIG. 4, the Y-axis direction). Namely, the interference fringe IS may include a fringe in which a plurality of dark parts ID, each of which extends along the direction in which the convex structure 81 extends (in the example illustrated in FIG. 4, the X-axis direction), are aligned along the direction in which the convex structures 81 are arranged (in the example illustrated in FIG. 4, the Y-axis direction).

Again in FIG. 1 and FIG. 2, the head driving system 12 moves the processing head 11 along at least one of the X-axis direction, the Y-axis direction, and the Z-axis direction under the control of the control apparatus 3. Note that the head driving system 12 may move the processing head 11 along at least one of the θX direction, the θY direction, and the θZ direction, in addition to or instead of at least one of the X-axis direction, the Y-axis direction, and the Z-axis direction. When the processing head 11 moves, a positional relationship between the stage 13 (furthermore, the workpiece W placed on the stage 13) and the processing head 11 changes. As a result, a positional relationship between an interference area IA (see FIG. 4), in which the processing head 11 forms the interference fringe IS on the workpiece W, and each of the stage 13 and the workpiece W. Namely, the interference area IA moves on the workpiece W.

The workpiece W is placed on the stage 13. The stage 13 may not hold the workpiece W placed on the stage 13. Namely, the stage 13 may not apply, to the workpiece W placed on the stage 13, a holding force for holding the workpiece W. Alternatively, the stage 13 may hold the workpiece W placed on the stage 13. Namely, the stage 13 may apply, to the workpiece W placed on the stage 13, the holding force for holding the workpiece W. For example, the stage 13 may hold the workpiece W by vacuum-sucking and / or electrostatic-sucking the workpiece W. Alternatively, a jig for holding the workpiece W may hold the workpiece W, and the stage 13 may hold the jig holding the workpiece W.

The stage driving system 14 moves the stage 13 under the control of the control apparatus 3. Specifically, the stage driving system 14 moves the stage 13 relative to the processing head 11. For example, the stage driving system 14 may move the stage 13 along at least one of the X-axis direction, the Y-axis direction, the Z-axis direction, the θX direction, the θY direction, and the θZ direction under the control of the control apparatus 3. Note that moving the stage along at least one of the θX direction, the θY direction, and the θZ direction may be considered to be equivalent to changing a pose of the stage 13 (furthermore, the workpiece W placed on the stage 13) around at least one of the X-axis, the Y-axis, and the Z-axis. Alternatively, moving the stage 13 along at least one of the θX direction, the θY direction, and the θZ direction may be considered to be equivalent to rotating (or rotationally moving) the stage 13 around at least one of the X-axis, the Y-axis, and the Z-axis.

When the stage 13 moves, the positional relationship between the stage 13 (furthermore, the workpiece W placed on the stage 13) and the processing head 11 changes. Furthermore, the processing and each of the stage 13 and the workpiece W. changes, the irradiation position of the processing light EL on the workpiece W changes. As a result, the positional relationship between the interference area IA (see FIG. 4), in which the processing head 11 forms the interference fringe IS on the workpiece W, and each of the stage 13 and the workpiece W. Namely, the interference area IA moves on the workpiece W.

The control apparatus 3 controls the operation of the processing system SYS. For example, the control apparatus 3 may generate processing control information for processing the workpiece W and control the processing apparatus 1 based on the processing control information so that the workpiece W is processed based on the generated processing control information. Namely, the control apparatus 3 may control the processing of the workpiece W.

The control apparatus 3 may include a calculation apparatus and a storage apparatus, for example. The calculation apparatus may include at least one of a CPU (Central Processing Unit) and a GPU (Graphical Processing Unit), for example. The control apparatus 3 serves as an apparatus for controlling the operation of the processing system SYS by means of the calculation apparatus executing a computer program. The computer program is a computer program that allows the control apparatus 3 (for example, the calculation apparatus) to perform (namely, to execute) a below described operation that should be performed by the control apparatus 3. Namely, the computer program is a computer program that allows the control apparatus 3 to function so as to make the processing system SYS perform the below described operation. The computer program executed by the calculation apparatus may be recorded in the storage apparatus (namely, a recording medium) of the control apparatus 3, or may be recorded in any recording medium (for example, a hard disk or a semiconductor memory) that is built in the control apparatus 3 or that is attachable to the control apparatus 3. Alternatively, the calculation apparatus may download the computer program that should be executed from an apparatus disposed at the outside of the control apparatus 3 through a network interface.

The control apparatus 3 may not be disposed in the processing system SYS. For example, the control apparatus 3 may be disposed at the outside of the processing system SYS as a server or the like. In this case, the control apparatus 3 may be connected to the processing system SYS through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet (a registered trademark) such as at least one of 10-BASE-T, 100B ASE-TX or 1000B ASE-T may be used as the wired network. A network using an electrical wave may be used as the wireless network. A network that is compatible to IEEE802. 1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 3 and the processing system SYS may be configured to transmit and receive various information through the network. Moreover, the control apparatus 3 may be configured to transmit information such as a command and a control parameter to the processing system SYS through the network. The processing system SYS may include a receiving apparatus that receives the information such as the command and the control parameter from the control apparatus 3 through the network. Alternatively, a first control apparatus that performs a part of the processing performed by the control apparatus 3 may be disposed in the processing system SYS and a second control apparatus that performs another part of the processing performed by the control apparatus 3 may be disposed at the outside of the processing system SYS.

An arithmetic model that is buildable by machine learning may be implemented in the control apparatus 3 by the calculation apparatus executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control apparatus 3 may control the operation of the processing system SYS by using the arithmetic model. Namely, the operation for controlling the operation of the processing system SYS may include an operation for controlling the operation of the processing system SYS by using the arithmetic model. Note that the arithmetic model that has been built by off-line machine learning using training data may be implemented in the control apparatus 3. Moreover, the arithmetic model implemented in the control apparatus 3 may be updated by online machine learning on the control apparatus 3. Alternatively, the control apparatus 3 may control the operation of the processing system SYS by using the arithmetic model implemented in an apparatus external to the control apparatus 3 (namely, an apparatus external to the processing system SYS), in addition to or instead of the arithmetic model implemented on the control apparatus 3.

Note that the recording medium recording therein the computer program that should be executed by the calculation apparatus may include an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program. The recording medium may include a device that is configured to record the computer program (for example, a device for a universal use or a device for an exclusive use in which the computer program is embedded to be executable in a form of at least one of a software, a firmware and the like). Moreover, each process or function included in the computer program may be realized by a logical process block that is realized in the control apparatus 3 by means of the control apparatus 3 (namely, a computer) executing the computer program, may be realized by a hardware such as a predetermined gate array (a FPGA, an ASIC) of the control apparatus 3, or may be realized in a form in which the logical process block and a partial hardware module that realizes an partial element of the hardware are combined.

### (2) Processing Optical System 111

### (2-1) Overview of Processing Optical System 111

Next, the processing optical system 111 that forms the interference fringe IS on the surface of the workpiece W will be described. As described above, the processing optical system 111 forms the interference fringe IS by irradiating the workpiece W with the plurality of processing lights EL1 from different incident directions, respectively. For example, the processing optical system 111 may form the interference fringe IS by irradiating the workpiece W with two processing lights EL1 from different incident directions, respectively. For example, the processing optical system 111 may form the interference fringe IS by irradiating the workpiece W with three processing lights EL1 from different incident directions, respectively. For example, the processing optical system 111 may form the interference fringe IS by irradiating the workpiece W with four processing lights EL1 from different incident directions, respectively. For example, the processing optical system 111 may form the interference fringe IS by irradiating the workpiece W with five processing lights EL1 from different incident directions, respectively. For example, the processing optical system 111 may form the interference fringe IS by irradiating the workpiece W with six processing lights EL1 from different incident directions, respectively. For example, the processing optical system 111 may form the interference fringe IS by irradiating the workpiece W with seven or more (for example, seven, nine, eleven, thirteen, twenty-one, or twenty-three) processing lights EL1 from different incident directions, respectively.

In the present example embodiment, the processing optical system 111 may add a difference in optical characteristic between at least two of the plurality of processing lights EL1. Namely, the processing optical system 111 may adjust the optical characteristic of at least one of the at least two processing lights EL1 so that the optical characteristics of the at least two processing lights EL1 are different from each other. The processing optical system 111 may adjust the optical characteristic of at least one of the at least two processing lights EL1 so that the optical characteristics of the at least two processing lights EL1 on the surface of the workpiece W are different from each other.

In the present example embodiment in which the difference in optical characteristic is provided between at least two processing lights EL1, a fluence distribution of the interference light forming the interference fringe IS on the surface of the workpiece W changes, compared to a comparison example in which no difference in optical characteristic is provided between at least two processing lights EL 1. Specifically, FIG. 5A illustrates the fluence distribution of the interference light in the comparative example, and FIG. 5B illustrates the fluence distribution of the interference light in the present example embodiment. As illustrated in FIG. 5A and FIG. 5B, a minimum fluence of the interference light is higher in the present example embodiment, compared to the comparative example. Incidentally, the minimum fluence may be a minimum value of the fluence of the interference light in the dark part ID of the interference fringe IS. The minimum fluence may be a minimum value of the fluence of the processing light EL1 reaching the dark part ID of the interference fringe IS. One of the reasons why the minimum fluence in the present example embodiment is higher than the minimum fluence in the comparative example is that providing the difference in optical characteristic between at least two processing lights EL1 results in such an optical effect that a light component that affects the fluence distribution without affecting the formation of the interference fringe IS is added to the interference light. Namely, the processing optical system 111 adds, to the interference light, the light component that affects the fluence distribution without affecting the formation of the interference fringe IS (a so-called DC component of the fluence distribution of the interference fringe IS) by providing the difference in optical characteristic between at least two processing lights EL 1. The processing optical system 111 adds, to the interference light, the DC component of the fluence distribution of the interference fringe IS without affecting affects the fluence distribution without affecting a contrast component of the fluence distribution that affects the formation of interference fringe IS (namely, a component that affects a contrast (light / dark) of the interference fringe IS) by providing the difference in optical characteristic between at least two processing lights EL 1.

Conversely, the processing optical system 111 may provide the difference in optical characteristic between at least two processing lights EL1 so that the light component that affects the fluence distribution without affecting the formation of the interference fringe IS is added to the interference light. The processing optical system 111 may provide the difference in optical characteristic between at least two processing lights EL 1 so that the light component that increases the minimum fluence without affecting the formation of the interference fringe IS is added to the interference light. Moreover, the difference in optical characteristics between at least two processing lights EL1 may be set to be an appropriate difference that can add, to the interference light, the light component that affects the fluence distribution without affecting the formation of the interference fringe IS. The appropriate difference that can add, to the interference light, the light component that affects the fluence distribution without affecting the formation of the interference fringe IS may be determined based on at least one of the characteristic of the processing light EL1, a characteristic of the interference light, a characteristic of the workpiece W, and a characteristic of the riblet structure RB. The difference that can add, to the interference light, the light component that affects the fluence distribution without affecting the formation of the interference fringe IS may be determined based on a result of an experiment or a simulation of forming the riblet structure RB on the workpiece W by forming the interference fringe IS.

FIG. 5A further illustrates the shape (especially, the cross-sectional shape) of the riblet structure RB formed by the interference fringe IS that is formed by the interference light having the fluence distribution illustrated in FIG. 5A. FIG. 5B further illustrates the shape (especially, the cross-sectional shape) of the riblet structure RB formed by the interference fringe IS that is formed by the interference light having the fluence distribution illustrated in FIG. 5B. As illustrated in FIG. 5A, in the riblet structure RB formed in the comparative example, there is a possibility that a shape of a tip of the convex structure 81 is a flat shape. This is because, the minimum fluence is relatively low in the comparative example as described above. Therefore, as illustrated in FIG. 5A, in the comparative example, there is a relatively high possibility that the fluence of at least a part of the dark part ID of the interference fringe IS is lower than a lower limit value TH_lowest of the fluence by which the workpiece W can be processed (namely, a part of the workpiece W can be removed). As a result, there is a relatively high possibility that at least a part of the part of the workpiece W at which the dark part ID of the interference fringe IS is formed is not processed, and as a result, the shape of the tip of the convex structure 81 is the flat shape. Considering the characteristic of the riblet structure RB, there is a possibility that the effect of reducing the resistance of the surface of the workpiece W to the fluid is reduced in a case where the shape of the tip of the convex structure 81 is the flat shape, compared to a case where the shape of the tip of the convex structure 81 is a pointed shape. On the other hand, as illustrated in FIG. 5B, in the riblet structure RB formed in the present example embodiment, there is a lower possibility that the shape of the tip of the convex structure 81 is the flat shape, compared to the comparative example. This is because the minimum fluence is relatively high in the present example embodiment as described above. Therefore, as illustrated in FIG. 5B, in the present example embodiment, there is a relatively low possibility that the fluence of at least part of the dark part ID of the interference fringe IS is lower than the lower limit value TH_lowest of the fluence by which the workpiece W can be processed. Namely, there is a relatively high possibility that the fluence of at least a part of the dark part ID of the interference fringe IS is set to be the fluence by which the workpiece W can be processed. As a result, the part of the workpiece W at which the dark part ID of the interference fringe IS is formed is processed, and as a result, there is a relatively high possibility that the shape of the tip of the convex structure 81 is close to or is matches an ideal shape (for example, the pointed shape). Namely, in the present example embodiment, an accuracy of the shape of the riblet structure RB is improved, compared to the comparative example. As a result, in the present example embodiment, there is a relatively high possibility that the riblet structure RB, by which the effect of reducing the resistance of the surface of the workpiece W to the fluid is relatively high, is formed.

Thus, the processing apparatus 1 in the present example embodiment can make the shape of the riblet structure RB be closer to or matches the ideal shape, compared to the comparative example. The processing apparatus 1 in the present example embodiment can make form the riblet structure RB having the shape that is closer to or matches the ideal shape, compared to the comparative example. In this case, the processing apparatus 1 may be considered to adjust the shape of the riblet structure RB by providing the difference in optical characteristic between at least two processing lights EL 1 so that the shape of the riblet structure RB formed on the workpiece W is a predetermined shape that is closer to the ideal shape than the shape of the riblet structure RB formed in the comparative example. As a result, the processing apparatus 1 can achieve an effect that the workpiece W can be properly processed so that the riblet structure RB having the shape that is close to or matches the ideal shape is formed.

Furthermore, the fluence distribution of the interference light changes when the difference in optical characteristic provided between at least two processing lights EL1 changes. Namely, the shape of the riblet structure RB formed on the workpiece W changes when the difference in optical characteristic provided between at least two processing lights EL1 changes. Therefore, the processing apparatus 1 may adjust (in other words, control or change) the shape of the riblet structure RB accordingly by changing the difference in optical characteristic provided between at least two processing lights EL1. As a result, the processing apparatus 1 can achieve an effect that the workpiece W can be properly processed so that the riblet structure RB having the shape that is close to or matches the ideal shape is formed, even in a case where the ideal shape changes.

For example, the processing optical system 111 may change the difference in optical characteristic between at least two processing lights EL1 so as to form the riblet structure RB having the shape that is close to or matches the ideal shape. The difference in optical characteristic provided between at least two processing lights EL1 may be set to be an appropriate difference that can form the riblet structure RB having the shape that is close to or matches the ideal shape. The appropriate difference that can form the riblet structure RB having the shape that is close to or matches the ideal shape may be determined based on at least one of the characteristic of the processing light EL1, the characteristic of the interference light, the characteristic of the workpiece W, and the characteristic of the riblet structure RB. The appropriate difference that can form the riblet structure RB having the shape that is closer to or matches the ideal shape may be determined based on a result of an experiment or a simulation of forming the riblet structure RB on the workpiece W by forming the interference fringe IS.

Incidentally, considering that the above-described effect can be properly achieved in a case where the minimum fluence of the interference light is equal to or higher than the lower limit value TH_lowest of the fluence by which the workpiece W can be processed, the processing optical system 111 may provide the difference in optical characteristic between at least two processing lights EL1 so that the minimum fluence of the interference light is set to be equal to or higher that the lower limit value TH_lowest. The processing optical system 111 may provide the difference in optical characteristic between at least two processing lights EL1 so that the minimum fluence of the interference light is set to be a fluence by which the workpiece W can be processed. The difference in optical characteristic provided between at least two processing lights EL1 may be set to be an appropriate difference that can set the minimum fluence of the interference light to be the fluence by which the workpiece W can be processed. As a result, the above-described effect can be appropriately achieved.

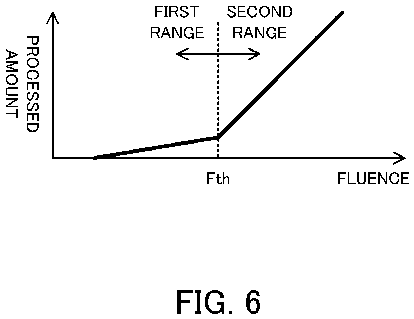

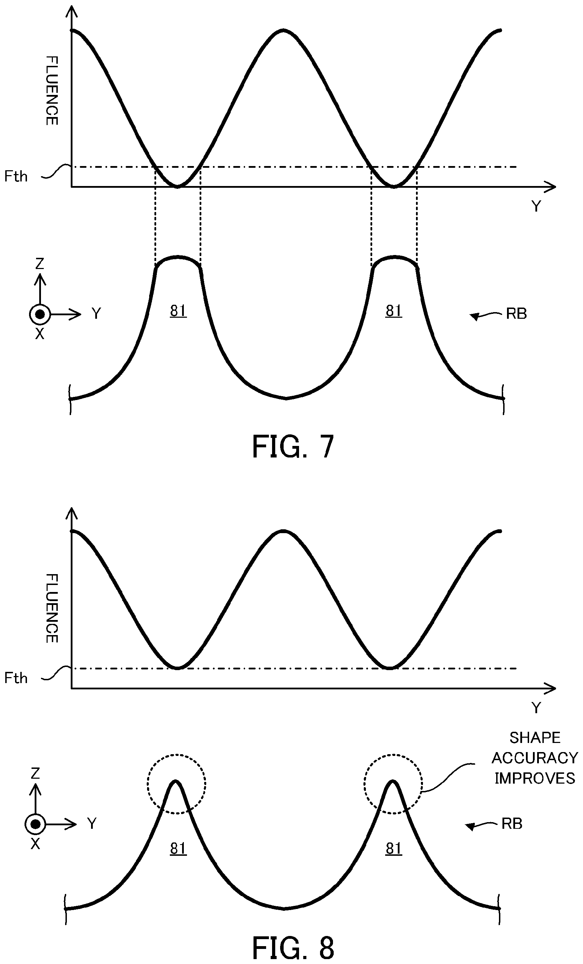

Depending on the characteristic of the workpiece W, there is a possibility that a relationship between the fluence of the light with which the workpiece W is irradiated and a processed amount of the workpiece W (for example, a removed amount per unit time, and a processed amount per pulse as one example) changes depending on the fluence. For example, as illustrated in FIG. 6, depending on the characteristic of the workpiece W, there is a possibility that a first relationship between the fluence and the processed amount of the workpiece W in a case where the fluence of the interference light with which the workpiece W is irradiated (alternatively, the fluence of the processing light EL1 that generates the interference light, the same is applied in this paragraph) is lower than a predetermined threshold value Fth is different from a second relationship between the fluence and the processed amount of the workpiece W in a case where the fluence of the interference light with which the workpiece W is irradiated is higher than the predetermined threshold value Fth. In this case, if the fluence of the interference light forming the interference fringe IS varies across both a first range that is lower than the predetermined threshold value Fth and a second range that is higher than the predetermined threshold value Fth as illustrated in an upper part of FIG. 7, the processed amount in a first part of the workpiece W irradiated with a light part of the interference light having the fluence lower than the predetermined threshold value Fth is different from the processed amount in a second part of the workpiece W irradiated with a light part of the interference light having the fluence higher than the predetermined threshold value Fth. In an example illustrated in FIG. 6, a ratio of an increase of the processed amount to an increase of the fluence in the second relation is larger than a ratio of an increase of the processed amount to an increase of the fluence in the first relation. In this case, the processed amount in the first part of the workpiece W irradiated with the light part of the interference light having the fluence lower than the predetermined threshold value Fth is smaller than the processed amount in the second part of the workpiece W irradiated with the light part of the interference light having the fluence higher than the predetermined threshold value Fth. As a result, there is a possibility that the processed amount in the first part of the workpiece W is insufficient and / or the processed amount in the second part of the workpiece W is excessive. As a result, there is a possibility that the accuracy of the shape of the riblet structure RB formed on the workpiece W deteriorates. For example, as illustrated in a lower part of FIG. 7, there is a possibility that the shape of the tip of the convex structure 81 formed mainly by the light part of the interference light having the relatively low fluence (for example, the light part with which the dark part ID is irradiated) is the flat shape.

Therefore, as illustrated in an upper part of FIG. 8, the processing optical system 111 may provide the difference in optical characteristic between at least two processing lights EL1 so that the minimum fluence of the interference light is equal to or higher than the predetermined threshold value Fth. Alternatively, the processing optical system 111 may provide the difference in optical characteristic between at least two processing lights EL1 so that the minimum fluence of the interference light is equal to or higher than a threshold value that is obtained by providing a predetermined margin to the predetermined threshold value Fth. Namely, the processing optical system 111 may provide the difference in optical characteristic between at least two processing lights EL1 so that the minimum fluence of the interference light is equal to or higher than a threshold value that is set based on the predetermined threshold value Fth. In this case, as illustrated in a lower part of FIG. 8, there is a relatively high possibility that the shape of the tip of the convex structure 81 formed mainly by the light part of the interference light having the relatively low fluence (for example, the light part with which the dark part ID is irradiated) is the ideal shape. As a result, the above-described effect can be appropriately achieved.

A wave parameter is one example of the optical characteristic that can achieve the above-described effect. The wave parameter may be a parameter that quantitatively or qualitatively indicates a nature of the processing light EL as a wave. In this case, the processing optical system 111 may provide the difference in wave parameter between at least two processing lights EL1. Namely, the processing optical system 111 may adjust the wave parameter of at least one of the at least two processing lights EL1 so that the wave parameters of the at least two processing lights EL1 are different from each other. The processing optical system 111 may adjust the wave parameter of at least one of the at least two processing lights EL1 so that the wave parameters of the at least two processing lights EL1 on the surface of the workpiece W are different from each other.

The wave parameter may include an intensity of the processing light EL1 (namely, an amplitude of the processing light EL1 as the wave). Especially, the wave parameter, may include the intensity of the processing light EL1 on the surface of the workpiece W. In this case, the processing optical system 111 may provide a difference in intensity between at least two processing lights EL 1. Namely, the processing optical system 111 may adjust the intensity of at least one of the at least two processing lights EL1 so that the intensities of the at least two processing lights EL1 are different from each other. The processing optical system 111 may adjust the intensity of at least one of the at least two processing lights EL1 so that the intensities of the at least two processing lights EL1 on the surface of the workpiece W are different from each other.

The wave parameter may include a phase of the processing light EL1. Especially, the wave parameter may include the phase of the processing light EL1 on the surface of the workpiece W. In this case, the processing optical system 111 may provide a difference in phase between at least two processing lights EL1. Namely, the processing optical system 111 may adjust the phase of at least one of the at least two processing lights EL1 so that the phases of the at least two processing lights EL1 are different from each other. The processing optical system 111 may adjust the phase of at least one of the at least two processing lights EL1 so that the phases of the at least two processing lights EL1 on the surface of the workpiece W are different from each other.

The wave parameter may include a polarization state of the processing light EL 1. Especially, the wave parameter may include the polarization state of the processing light EL1 on the surface of the workpiece W. In this case, the processing optical system 111 may provide a difference in polarization (namely, a difference in polarization state) between at least two processing lights EL1. Namely, the processing optical system 111 may adjust the polarization state of at least one of the at least two processing lights EL1 so that the polarization states of the at least two processing lights EL1 are different from each other. The processing optical system 111 may adjust the polarization state of at least one of the at least two processing lights EL1 so that the polarization states of the at least two processing lights EL1 on the surface of the workpiece W are different from each other.

In the below-described description, the processing optical system 111 that provides the difference in intensity between at least two processing lights EL1 (in the below-described description, it is referred to as a "processing optical system 111a"), the processing optical system 111 that provides the difference in phase between at least two processing lights EL1 (in the below-described description, it is referred to as a "processing optical system 111b"), and the processing optical system 111 that provides the difference in polarization between at least two processing lights EL1 (in the below-described description, it is referred to as a "processing optical system 1 1 1c") will be described in sequence as one example of the processing optical system 111.

### (2-2) Processing Optical System 111a

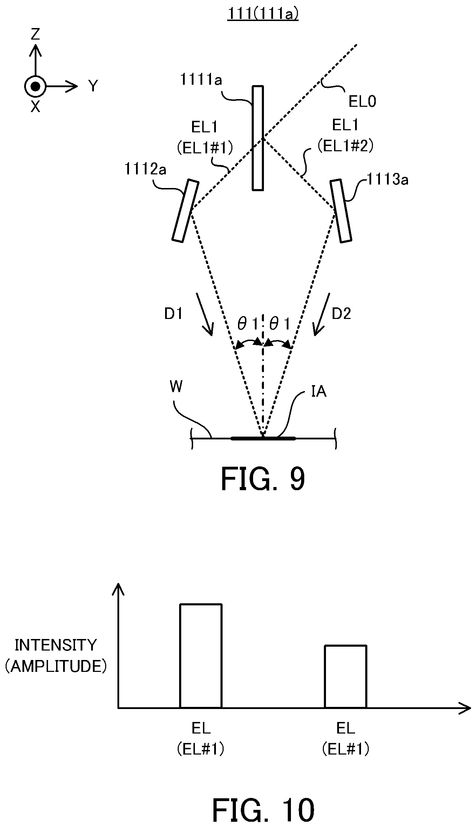

Firstly, with reference to FIG. 9, the processing optical system 111a that provides the difference in intensity between at least two processing lights EL1 will be described. FIG. 9 is a cross-sectional view that illustrates a configuration of the processing optical system 111a that provides the difference in intensity between at least two processing lights EL1.

As illustrated in FIG. 9, the processing optical system 111a includes a beam splitter 1111a, a mirror 1112a, and a mirror 1113a.

The processing light EL0 emitted from the processing light source 2 enters the beam splitter 1111a. The beam splitter 1111a divides the processing light EL0 into the plurality of processing lights EL1. Namely, the beam splitter 1111a generates the plurality of processing lights EL1 by dividing the processing light EL0. Therefore, beam splitter 1111a may be referred to as a dividing optical system. In the below-described description, an example in which the beam splitter 1111a divides the processing light EL0 into two processing lights EL1 (specifically, processing lights EL1#1 and EL1#2), as illustrated in FIG. 9, for convenience of description.

The beam splitter 1111a may be an amplitude-dividing-type of beam splitter. In this case, a part of the processing light EL0 passes through the beam splitter 1111a as the processing light EL1#1. On the other hand, another part of the processing light EL0 is reflected by the beam splitter 1111a as the processing light EL1#2. Incidentally, the beam splitter 1111a is not limited to the amplitude-dividing-type of beam splitter, but may be a polarization beam splitter. In this case, a polarization control component such as a wave plate may be disposed on one or more of optical paths of the plurality of processing lights divided by the polarization beam splitter.

The processing light EL1#1 that has passed through the beam splitter 1111a enters the mirror 1112a. The mirror 1112a reflects the processing light EL1#1 toward the workpiece W. The mirror 1112a reflects the processing light EL1#1 so that the processing light EL1#1 enters the workpiece W at an incident angle θ1 from an incident direction D1.

The processing light EL1#2 that has been reflected by the beam splitter 1111a enters the mirror 1113a. The mirror 1113a reflects the processing light EL1#2 toward the workpiece W. The mirror 1113a reflects the processing light EL1#1 so that the processing light EL1#2 enters the workpiece W at the incident angle θ1 from an incident direction D2 that is different from the incident direction D1.

The interference area IA set on the workpiece W is irradiated with the processing light EL1#1 that has been reflected by the mirror 1112a and the processing light EL1#2 that has been reflected by the mirror 1113a. As a result, the interference light generated by the interference between the processing lights EL1#1 and EL1#2 forms the interference fringe IS in the interference area IA. In this case, the beam splitter 1111a, the mirror 1112a, and the mirror 1113a may be considered to serve as an interference optical system for forming the interference fringe IS.

Here, in a case where a dividing ratio of the beam splitter 1111a is 1 (namely, 1:1), the intensity of the processing light EL1#1 that has passed through the beam splitter 111 1a is equal to the intensity of the processing light EL1#2 that has been reflected by the beam splitter 1111a. On the other hand, in a case where the dividing ratio of the beam splitter 1111a is not 1 (namely, not 1: 1), the intensity of the processing light EL1#1 that has passed through the beam splitter 1111a is different from the intensity of the processing light EL1#2 that has been reflected by the beam splitter 1111a. Therefore, in order to provide the difference in intensity between the processing lights EL1#1 and EL1#2, the dividing ratio of the beam splitter 1111a may be set to be a ratio that is larger than or smaller than 1. In this case, the beam splitter 1111a may be considered to serve as an adjustment optical system, an intensity adjustment optical system, or an intensity adjustment member for providing the difference in intensity between the processing lights EL1#1 and EL1#2 (namely, for adjusting the intensity of at least one of the processing lights EL1#1 and EL1#2).

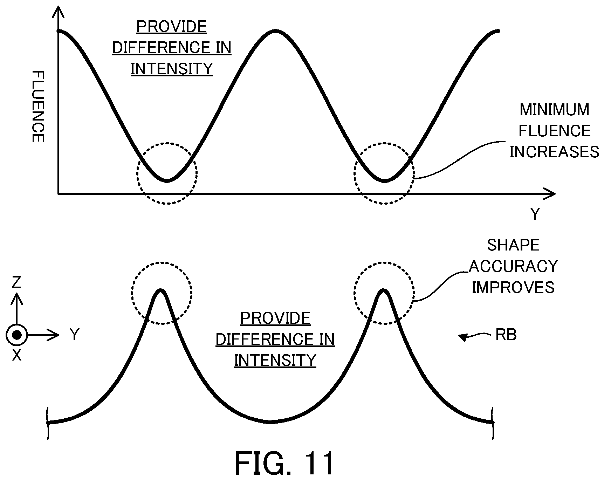

In a case where the intensity of the processing light EL1#1 that has passed through the beam splitter 1111a is different from the intensity of the processing light EL1#2 that has been reflected by the beam splitter 1111 as described above, the intensity of the processing light EL1#1 on the surface of the workpiece W is different from the intensity of the processing light EL1#2 on the surface of the workpiece W, as illustrated in FIG. 10. Therefore, the processing optical system 111a adds, to the interference light, the light component (for example, the DC component) that affects the fluence distribution without affecting the formation of the interference fringe IS by providing the difference in intensity between the processing lights EL1#1 and EL1#2. Therefore, the minimum fluence of the interference light is higher, compared to the comparative example (see FIG. 5A) in which the difference in intensity is not provided between the processing lights EL1#1 and EL1#2, as illustrated in an upper part of FIG. 11. Therefore, the accuracy of the shape of the riblet structure RB is improved, compared to the comparative example (see FIG. 5A), as illustrated in a lower part of FIG. 11. As one example, there is a relatively high possibility that the shape of the tip of the convex structure 81 formed mainly by the light part of the interference light having the relatively low fluence (for example, the light part with which the dark part ID is irradiated) is close to or matches the ideal shape. Therefore, the processing apparatus 1 can achieve an effect that the workpiece W can be properly processed so that the riblet structure RB having the shape that is close to or matches the ideal shape is formed.

In a case where the dividing ratio of the beam splitter 1111a is variable, the beam splitter 1111a may change an adjustment degree (in other words, an adjusted amount or a changed amount) of the intensities of the processing lights EL1#1 and EL1#2 by changing the dividing ratio in dividing the processing light EL0 into the two processing lights EL1#1 and EL1#2. Namely, the beam splitter 1111a may change the difference in intensity provided between the processing lights EL1#1 and EL1#2 by changing the dividing ratio. When the difference in intensity provided between the processing lights EL1#1 and EL1#2 is changed, the fluence distribution of the interference light is changed. In this case, the processing apparatus 1 may adjust (in other words, control or change) the shape of the riblet structure RB accordingly by changing the difference in intensity provided between the processing lights EL1#1 and EL1#2 to change the fluence distribution of the interference light. In this case, the processing apparatus 1 can achieve an effect that the workpiece W can be properly processed so that the riblet structure RB having the shape that is close to or matches the ideal shape is formed, even in a case where the ideal shape changes, as described above.

### (2-3) Configuration of Processing Optical System 111b

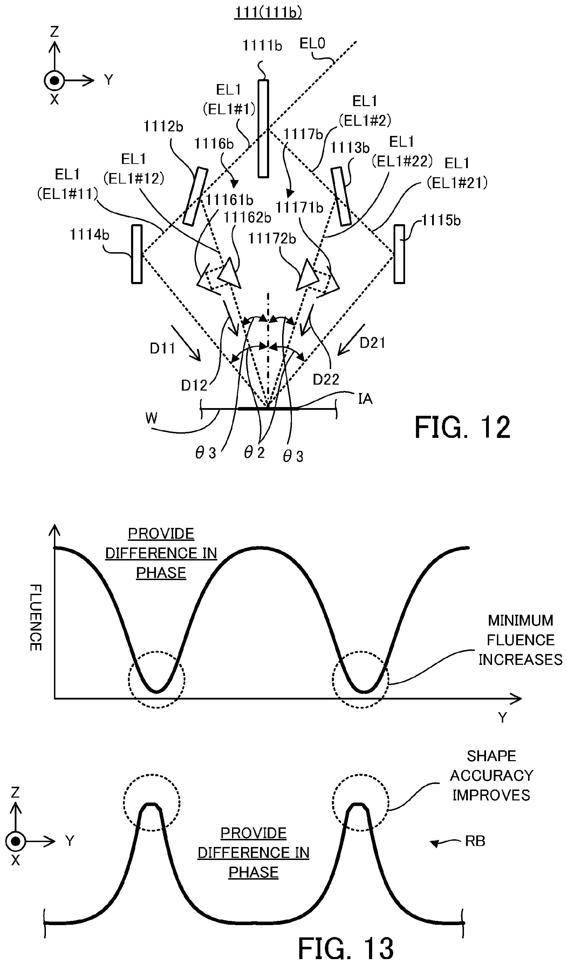

Next, with reference to FIG. 12, the processing optical system 111b that provides the difference in phase between at least two processing lights EL1 will be described. FIG. 12 is a cross-sectional view that illustrates a configuration of the processing optical system 111b that provides the difference in phase between at least two processing lights EL 1.

As illustrated in FIG. 12, the processing optical system 111b includes a beam splitter 1111b, a beam splitter 1112b, a beam splitter 1113b, a mirror 1114b, a mirror 1115b, an optical path length adjustment element 1116b, and an optical path length adjustment element 1117b.

The processing light EL0 emitted from the processing light source 2 enters the beam splitter 1111b. The beam splitter 1111b divides the processing light EL0 into the plurality of processing lights EL1. Namely, the beam splitter 1111b generates the plurality of processing lights EL1 by dividing the processing light EL0. Therefore, the beam splitter 1111b may be referred to as a dividing optical system. In the below-described description, an example in which the beam splitter 1111b divides the processing light EL0 into two processing lights EL1 (specifically, processing lights EL1#1 and EL1#2), as illustrated in FIG. 12, for convenience of description.

The beam splitter 1111b may be an amplitude-dividing-type of beam splitter. In this case, a part of the processing light EL0 passes through the beam splitter 1111b as the processing light EL1#1. On the other hand, another part of the processing light EL0 is reflected by the beam splitter 1111b as the processing light EL1#2. Incidentally, the dividing ratio of the beam splitter 1111b is 1, but may be larger that or smaller than 1.

The processing light EL1#1 that has passed through the beam splitter 1111b enters the beam splitter 1112b. The beam splitter 1112b divides the processing light EL1#1 into a plurality of processing lights EL1. Namely, the beam splitter 1112b generates the plurality of processing lights EL1 by dividing the processing light EL1#1. Therefore, the beam splitter 1112b may be referred to as a dividing optical system. In the below-described description, an example in which the beam splitter 1112b divides the processing light EL1#1 into two processing lights EL1 (specifically, processing lights EL1#11 and EL1#12), as illustrated in FIG. 12, for convenience of description.

The beam splitter 1112b may be an amplitude-dividing-type of beam splitter. In this case, a part of the processing light EL1#1 passes through the beam splitter 1112b as the processing light EL1#11. On the other hand, another part of the processing light EL1#1 is reflected by the beam splitter 1112b as the processing light EL1#12. Incidentally, the dividing ratio of the beam splitter 1112b is 1, but may be larger that or smaller than 1.

The processing light EL1#2 that has been reflected by the beam splitter 1111b enters the beam splitter 1113b. The beam splitter 1113b divides the processing light EL1#2 into a plurality of processing lights EL1. Namely, the beam splitter 1113b generates a plurality of processing lights EL1 by dividing the processing light EL1#2. Therefore, the beam splitter 1113b may be referred to as a dividing optical system. In the below-described description, an example in which the beam splitter 1113b divides the processing light EL1#2 into two processing lights EL1 (specifically, processing lights EL1#21 and EL1#22), as illustrated in FIG. 12, for convenience of description.

The beam splitter 1113b may be an amplitude-dividing-type of beam splitter. In this case, a part of the processing light EL1#2 passes through the beam splitter 1113b as the processing light EL1#21. On the other hand, another part of the processing light EL1#2 is reflected by the beam splitter 1113b as the processing light EL1#22. Incidentally, the dividing ratio of the beam splitter 1113b is 1, but may be larger than or smaller than 1.

The processing light EL1#11 that has passed through the beam splitter 1112b enters the mirror 1114b. The mirror 1114b reflects the processing light EL1#11 toward the workpiece W. The mirror 1114b reflects the processing light EL1#11 so that the processing light EL1#11 enters the workpiece W at an incident angle θ2 from an incident direction D11.

The processing light EL1#12 that has been reflected by the beam splitter 1112b enters the workpiece W through the optical path length adjustment element 1116b. The beam splitter 1112b reflects a part of the processing light EL1#1 as the processing light EL1#12 so that the processing light EL1#12 enters the workpiece W at an incident angle θ3 that is different from the incident angle θ2 from an incident direction D12 that is different from the incident direction D11.

The processing light EL1#21 that has passed through the beam splitter 1113b enters the mirror 1115b. The mirror 1115b reflects the processing light EL1#21 toward the workpiece W. The mirror 1115b reflects the processing light EL1#21 so that the processing light EL1#21 enters the workpiece W at the incident angle θ2 from an incident direction D21 that is different from the incident directions D11 and D12.

The processing light EL1#22 that has been reflected by the beam splitter 1113b enters the workpiece W through the optical path length adjustment element 1117b. The beam splitter 1113b reflects a part of the processing light EL1#2 as the processing light EL1#22 so that the processing light EL1#22 enters the workpiece W at the incident angle θ3 from an incident direction D22 that is different from the incident directions D11, D12 and D21.

The interference area IA set on the workpiece W is irradiated with the processing light EL1#11 that has been reflected by the mirror 1114b, the processing light EL1#12 that has been reflected by the beam splitter 1112b, the processing light EL1#21 that has been reflected by the mirror 1115b, and the processing light EL1#22 that has been reflected by the beam splitter 1113b. As a result, the interference light generated by the interference among the processing lights EL1#11 to EL1#22 forms the interference fringe IS in the interference area IA. In this case, the beam splitters 1111b to 1113b and the mirrors 1114b to 1115b may be considered to serve as an interference optical system for forming the interference fringe IS.

The optical path length adjustment element 1116b is disposed on an optical path of the processing light EL1#12 between the beam splitter 1112b and the workpiece W. The optical path length adjustment element 1116b is configured to adjust an optical path length of the processing light EL1#12. In an example illustrated in FIG. 12, the optical path length adjustment element 1116b includes a retroreflector 11161b and a prism mirror 11162b that reflects the processing light EL1#12 emitted from the beam splitter 1112b toward the retroreflector 11161b and reflects the processing light EL1#12 emitted from the retroreflector 11161b toward the workpiece W. In this case, the optical path length adjustment element 1116b may adjust the optical path length of the processing light EL1#12 by moving the retroreflector 11161b along a direction that intersects the optical path of the processing light EL1#12 between the beam splitter 1112b and the workpiece W.

When the optical path length of the processing light EL1#12 is changed, the phase of the processing light EL1#12 changes. Therefore, the optical path length adjustment element 1116b may be considered to adjust the phase of the processing light EL1#12 by adjusting the optical path length of the processing light EL1#12. In this case, the optical path length adjustment element 1116b may adjust the optical path length of the processing light EL1#12 so as to provide the difference in phase between the processing lights EL1#11 and EL1#12. Namely, the optical path length adjustment element 1116b may adjust the optical path length of the processing light EL1#12 so that the phase of the processing light EL1#11 is different from the phase of the processing light EL1#12. In this case, the optical path length adjustment element 1116b may be considered to serve as an adjustment optical system, a phase adjustment optical system, or a phase adjustment member for providing the difference in phase between the processing lights EL1#11 and EL1#12 (namely, for adjusting the phase of at least one of the processing lights EL1#11 and EL1#12).

Incidentally, the optical path length adjustment element 1116b may adjust the optical path length of the processing light EL1#12 so as to provide the difference in phase between the processing lights EL1#21 and EL1#12. Namely, the optical path length adjustment element 1116b may adjust the optical path length of the processing light EL1#12 so that the phase of the processing light EL1#21 is different from the phase of the processing light EL1#12. In this case, the optical path length adjustment element 1116b may be considered to serve as an adjustment optical system, a phase adjustment optical system or a phase adjustment member for providing the difference in phase between the processing lights EL1#21 and EL1#12 (namely, for adjusting the phase of at least one of the processing lights EL1#21 and EL1#12).

On the other hand, the optical path length adjustment element 1116b may adjust the optical path length of the processing light EL1#12 so as not to provide the difference in phase between the processing lights EL1#11 and EL1#12. Namely, the optical path length adjustment element 1116b may adjust the optical path length of the processing light EL1#12 so that the phase of the processing light EL 1#11 matches the phase of the processing light EL1#12. In other words, the optical path length adjustment element 1116b may adjust the optical path length of the processing light EL1#12 so that the optical path length of the processing light EL1#12 between the beam splitter 1112b and the workpiece W is equal to the optical path length of the processing light EL1#22 between the beam splitter 1113b and the workpiece W.

The optical path length adjustment element 1117b is disposed on an optical path of the processing light EL1#22 between the beam splitter 1113b and the workpiece W. The optical path length adjustment element 1116b is configured to adjust an optical path length of the processing light EL1#22. In the example illustrated in FIG. 12, the optical path length adjustment element 1117b includes a retroreflector 11171b and a prism mirror 11172b that reflects the processing light EL1#22 emitted from the beam splitter 1113b toward the retroreflector 11171b and reflects the processing light EL1#22 emitted from the retroreflector 11171b toward the workpiece W. In this case, the optical path length adjustment element 1117b may adjust the optical path length of the processing light EL1#22 by moving the retroreflector 11171b along a direction that intersects the optical path of the processing light EL1#22 between the beam splitter 1113b and the workpiece W.

When the optical path length of the processing light EL1#22 is changed, the phase of the processing light EL1#22 changes. Therefore, the optical path length adjustment element 1117b may be considered to adjust the phase of the processing light EL1#22 by adjusting the optical path length of the processing light EL1#22. In this case, the optical path length adjustment element 1117b may adjust the optical path length of the processing light EL1#22 so as to provide the difference in phase between the processing lights EL1#21 and EL1#22. Namely, the optical path length adjustment element 1117b may adjust the optical path length of the processing light EL1#22 so that the phase of the processing light EL1#21 is different from the phase of the processing light EL1#22. In this case, the optical path length adjustment element 1117b may be considered to serve as an adjustment optical system, a phase adjustment optical system, or a phase adjustment member for providing the difference in phase between the processing lights EL1#21 and EL1#22 (namely, for adjusting the phase of at least one of the processing lights EL1#21 and EL1#22).

Incidentally, the optical path length adjustment element 1117b may adjust the optical path length of the processing light EL1#22 so as to provide the difference in phase between the processing lights EL1#11 and EL1#22. Namely, the optical path length adjustment element 1117b may adjust the optical path length of the processing light EL1#22 so that the phase of the processing light EL1#11 is different from the phase of the processing light EL1#22. In this case, the optical path length adjustment element 1117b may be considered to serve as an adjustment optical system, a phase adjustment optical system or a phase adjustment member for providing the difference in phase between the processing lights EL1#11 and EL1#22 (namely, for adjusting the phase of at least one of the processing lights EL1#11 and EL1#22).

On the other hand, the optical path length adjustment element 1117b may adjust the optical path length of the processing light EL1#22 so as not to provide the difference in phase between the processing lights EL1#11 and EL1#12. Namely, the optical path length adjustment element 1117b may adjust the optical path length of the processing light EL1#22 so that the phase of the processing light EL 1#11 matches the phase of the processing light EL1#12. In other words, the optical path length adjustment element 1117b may adjust the optical path length of the processing light EL1#22 so that the optical path length of the processing light EL1#12 between the beam splitter 1112b and the workpiece W is equal to the optical path length of the processing light EL1#22 between the beam splitter 1113b and the workpiece W.

Incidentally, in the example illustrated in FIG. 12, each of the optical path length adjustment elements 1116b and 1117b does not adjust an optical path length of each of the processing lights EL1#11 and EL#21. Namely, each of the optical path length adjustment elements 1116b and 1117b does not adjust the phase of each of the processing lights EL1#11 and EL#21. In this case, the phase of the processing light EL1#11 may match the phase of the processing light EL1#21. Namely, the optical path length of the processing light EL1#11 between the beam splitter 1112b and the workpiece W may be equal to the optical path length of the processing light EL1#21 between the beam splitter 1113b and the workpiece W.

The difference in phase provided by each of the optical path length adjustment elements 1116b and 1117b may be 180 + 360 × n degrees. Note that n is a variable number representing an integer. However, the difference in phase provided by each of the optical path length adjustment elements 1116b and 1117b may be different from 180 + 360 × n degrees.

Due to the optical path length adjustment elements 1116b and 1117b, the phase of the processing light EL1#11 is different from the phase of the processing light EL1#12 and the phase of the processing light EL1#21 is different from the phase of the processing light EL1#22 on the surface of the workpiece W. Therefore, the processing optical system 111b adds, to the interference light, the light component (for example, the DC component) that affects the fluence distribution without affecting the formation of the interference fringe IS by providing the difference in phase between the processing lights EL1#11 and EL1#12 and between the processing lights EL1#21 and EL1#22. Therefore, the minimum fluence of the interference light is higher, compared to the comparative example (see FIG. 5A) in which the difference in phase is not provided between the processing lights EL1#11 and EL1#12 and between the processing lights EL1#21 and EL1#22, as illustrated in an upper part of FIG. 13. Therefore, the accuracy of the shape of the riblet structure RB is improved, compared to the comparative example (see FIG. 5A), as illustrated in a lower part of FIG. 13. As one example, there is a relatively high possibility that the shape of the tip of the convex structure 81 formed mainly by the light part of the interference light having the relatively low fluence (for example, the light part with which the dark part ID is irradiated) is close to or matches the ideal shape. Therefore, the processing apparatus 1 can achieve an effect that the workpiece W can be properly processed so that the riblet structure RB having the shape that is close to or matches the ideal shape is formed.

The optical path length adjustment element 1116b may be configured to change an adjustment degree of the optical path length of the processing light EL1#12. The optical path length adjustment element 1116b may be configured to change an adjustment degree of the phase of the processing light EL1#12 by changing the adjustment degree of the optical path length of the processing light EL1#12. The optical path length adjustment element 1116b may be configured to change the difference in phase between the processing lights EL1#11 and EL1#12 by changing the adjustment degree of the optical path length of the processing light EL1#12. When the difference in phase provided between the processing lights EL1#11 and EL1#12 is changed, the fluence distribution of the interference light changes. In this case, the processing apparatus 1 may adjust (in other words, control or change) the shape of the riblet structure RB accordingly by changing the difference in phase provided between the processing lights EL1#11 and EL1#12 to change the fluence distribution of the interference light. In this case, the processing apparatus 1 can achieve an effect that the workpiece W can be properly processed so that the riblet structure RB having the shape that is close to or matches the ideal shape is formed, even in a case where the ideal shape changes, as described above.

The optical path length adjustment element 1117b may be configured to change an adjustment degree of the optical path length of the processing light EL1#22. The optical path length adjustment element 1117b may be configured to change an adjustment degree of the phase of the processing light EL1#22 by changing the adjustment degree of the optical path length of the processing light EL1#22. The optical path length adjustment element 1117b may be configured to change the difference in phase between the processing lights EL1#21 and EL1#22 by changing the adjustment degree of the optical path length of the processing light EL1#22. When the difference in phase provided between the processing lights EL1#21 and EL1#22 is changed, the fluence distribution of the interference light changes. In this case, the processing apparatus 1 may adjust (in other words, control or change) the shape of the riblet structure RB accordingly by changing the difference in phase provided between the processing lights EL21#21 and EL2#22 to change the fluence distribution of the interference light. In this case, the processing apparatus 1 can achieve an effect that the workpiece W can be properly processed so that the riblet structure RB having the shape that is close to or matches the ideal shape is formed, even in a case where the ideal shape changes, as described above.

However, the optical path length adjustment element 1116b may not be configured to change the adjustment degree of the optical path length of the processing light EL1#12. The optical path length adjustment element 1116b may not be configured to change the adjustment degree of the phase of the processing light EL1#12. The optical path length adjustment element 1116b may not be configured to change the difference in phase between the processing lights EL1#11 and EL1#12. In this case, the optical path length adjustment element 1116b may provide a fixed difference in phase between the processing lights EL 1#11 and EL 1#12. Even in this case, as long as the difference in phase is provided between the processing lights EL1#11 and EL1#12, the processing apparatus 1 can still achieve an effect that the workpiece W can be properly processed so that the riblet structure RB having the shape that is close to or matches the ideal shape is formed.

Moreover, the optical path length adjustment element 1117b may not be configured to change the adjustment degree of the optical path length of the processing light EL1#22. The optical path length adjustment element 1117b may not be configured to change the adjustment degree of the phase of the processing light EL1#22. The optical path length adjustment element 1117b may not be configured to change the difference in phase between the processing lights EL1#21 and EL1#22. In this case, the optical path length adjustment element 1117b may provide a fixed difference in phase between the processing lights EL1#21 and EL1#22. Even in this case, as long as the difference in phase is provided between the processing lights EL1#21 and EL1#22, the processing apparatus 1 can still achieve an effect that the workpiece W can be properly processed so that the riblet structure RB having the shape that is close to or matches the ideal shape is formed.

Incidentally, the processing optical system 111b may include one of the optical path length adjustment elements 1116b and 1117b but may not include the other one of the optical path length adjustment elements 1116b and 1117b. Namely, the processing optical system 111b may not necessarily include both of the optical path length adjustment elements 1116b and 1117b. Moreover, the processing optical system 111b may include at least one of an optical path length adjustment element that is configured to adjust the optical path length of the processing light EL#11 and an optical path length adjustment element that is configured to adjust the optical path length of the processing light EL#21, in addition to or instead of at least one of the optical path length adjustment elements 1116b and 1117b. In short, the processing optical system 111b may have any configuration as long as it is configured to provide the difference in phase between at least one of the processing lights EL1#11 and EL1#21 and at least one of the processing lights EL1#12 and EL1#22. Similarly, in a case where the processing optical system 111b irradiates the workpiece W with three or five or more processing lights EL1, the processing optical system 111b may also have any configuration as long as it is configured to provide the difference in phase between at least two of the three or five or more processing lights EL1.

### (2-4) Configuration of Processing Optical System 111c

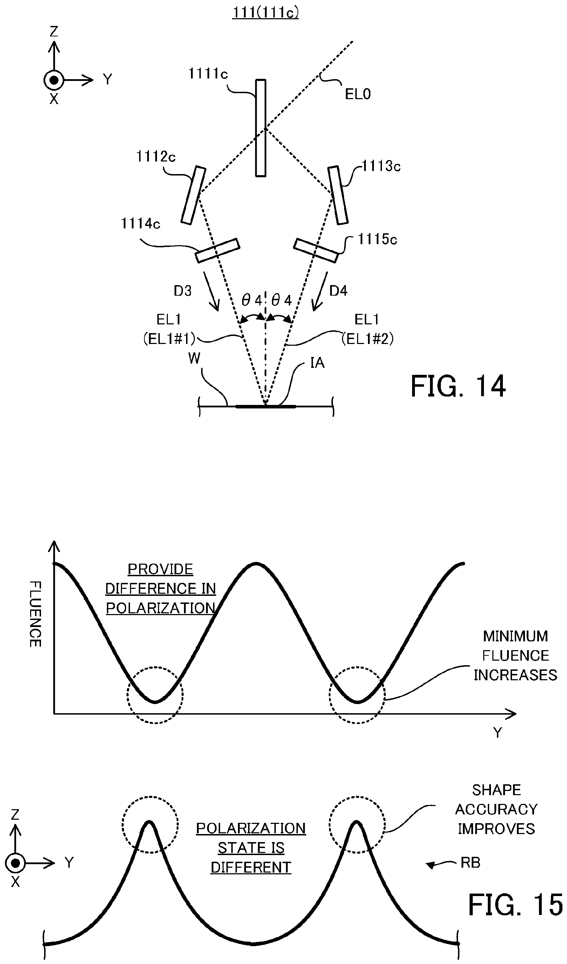

Next, with reference to FIG. 14, the processing optical system 111c that provides the difference in polarization between at least two processing lights EL1 will be described. FIG. 14 is a cross-sectional view that illustrates a configuration of the processing optical system 111c that provides the difference in polarization between at least two processing lights EL1.

As illustrated in FIG. 9, the processing optical system 111c includes a beam splitter 1111c, a mirror 1112c, a mirror 1113c, a polarization adjustment optical system 1114c, and a polarization adjustment optical system 1115c.

The processing light EL0 emitted from the processing light source 2 enters the beam splitter 1111c. The beam splitter 1111c divides the processing light EL0 into the plurality of processing lights EL1. Namely, the beam splitter 1111c generates the plurality of processing lights EL1 by dividing the processing light EL0. Therefore, the beam splitter 1111c may be referred to as a dividing optical system. In the below-described description, an example in which the beam splitter 1111c divides the processing light EL0 into two processing lights EL1 (specifically, processing lights EL1#1 and EL1#2), as illustrated in FIG. 14, for convenience of description.

The beam splitter 1111c may be an amplitude-dividing-type of beam splitter. In this case, a part of the processing light EL0 passes through the beam splitter 1111c as the processing light EL1#1. On the other hand, another part of the processing light EL0 is reflected by the beam splitter 1111c as the processing light EL1#2. Incidentally, the dividing ratio of the beam splitter 1111c is 1, but may be larger that or smaller than 1.

The processing light EL1#1 that has passed through the beam splitter 1111c enters the mirror 1112c. The mirror 1112c reflects the processing light EL1#1 toward the workpiece W. The mirror 1112c reflects the processing light EL1#1 so that the processing light EL1#1 enters the workpiece W at an incident angle θ4 from an incident direction D3. The processing light EL#1 reflected by the mirror 1112c enters the workpiece W through the polarization adjustment optical system 1114c.

The processing light EL1#2 that has been reflected by the beam splitter 1111c enters the mirror 1113c. The mirror 1113c reflects the processing light EL1#2 toward the workpiece W. The mirror 1113c reflects the processing light EL1#2 so that the processing light EL1#2 enters the workpiece W at the incident angle θ4 from an incident direction D4 that is different from the incident direction D3. The processing light EL#2 reflected by the mirror 1113c enters the workpiece W through the polarization adjustment optical system 1115c.

The interference area IA set on the workpiece W is irradiated with the processing light EL1#1 that has been reflected by the mirror 1112c and the processing light EL1#2 that has been reflected by the mirror 1113c. As a result, the interference light generated by the interference between the processing lights EL1#1 and EL1#2 forms the interference fringe IS in the interference area IA. In this case, the beam splitter 1111c, the mirror 1112c and the mirror 1113c may be considered to serve as an interference optical system for forming the interference fringe IS.

The polarization adjustment optical system 1114c is disposed on an optical path of the processing light EL1#1 between the mirror 1112c and the workpiece W. However, the polarization adjustment optical system 1114c may be disposed on an optical path of the processing light EL1#1 between the beam splitter 1111c and the mirror 1112c. The processing light EL1#1 that has been reflected by the mirror 1112c enters the polarization adjustment optical system 1114c. The polarization adjustment optical system 1114c is configured to adjust the polarization state of the processing light EL1#1 entering the polarization adjustment optical system 1114c. In order to adjust the polarization state of the processing light EL1#1, the polarization adjustment optical system 1114c may include a wave plate, for example. The processing light EL1#1, whose polarization state has been adjusted by the polarization adjustment optical system 1114c, enters the workpiece W. Namely, the processing light EL#1 that has been reflected by the mirror 1112c enters the workpiece W after passing through the polarization adjustment optical system 1114c.

The polarization adjustment optical system 1115c is disposed on an optical path of the processing light EL1#2 between the mirror 1113c and the workpiece W. However, the polarization adjustment optical system 1115c may be disposed on an optical path of the processing light EL1#2 between the beam splitter 1111c and the mirror 1113c. The processing light EL1#2 that has been reflected by the mirror 1113c enters the polarization adjustment optical system 1115c. The polarization adjustment optical system 1115c is configured to adjust the polarization state of the processing light EL1#2 entering the polarization adjustment optical system 1115c. In order to adjust the polarization state of the processing light EL1#2, the polarization adjustment optical system 1115c may include a wave plate, for example. The processing light EL1#2, whose polarization state has been adjusted by the polarization adjustment optical system 1115c, enters the workpiece W. Namely, the processing light EL#2 that has been reflected by the mirror 1113c enters the workpiece W after passing through the polarization adjustment optical system 1115c.

At least one of the polarization adjustment optical systems 1114c and 1115c may adjust the polarization state of at least one of the processing lights EL1#1 and EL1 #2 so as to provide the difference in polarization (namely, the difference in polarization state) between the processing lights EL1#1 and EL1#2. Namely, at least one of the polarization adjustment optical systems 1114c and 1115c may adjust the polarization state of at least one of the processing lights EL1#1 and EL1#2 so that the polarization state of the processing light EL1#1 is different from the polarization state of the processing light EL1#2. In this case, at least one of the polarization adjustment optical systems 1114c and 1115c may be considered to serve as an adjustment optical system, a phase adjustment optical system or a phase adjustment component for providing the difference in polarization between the processing lights EL1#1 and EL1#2 (namely, for adjusting the polarization state of at least one of the processing lights EL1#21 and EL1#22).

Due to the polarization adjustment optical systems 1114c and 1115c, the polarization state of the processing light EL 1#1 is different from the polarization state of the processing light EL1#2 on the surface of the workpiece W. Therefore, the processing optical system 111c adds, to the interference light, the light component (for example, the DC component) that affects the fluence distribution without affecting the formation of the interference fringe IS by providing the difference in polarization between the processing lights EL1#1 and EL1#2. Therefore, the minimum fluence of the interference light is higher, compared to the comparative example (see FIG. 5A) in which the difference in polarization is not provided between the processing lights EL1#1 and EL 1#2, as illustrated in an upper part of FIG. 15. Therefore, the accuracy of the shape of the riblet structure RB is improved, compared to the comparative example (see FIG. 5A), as illustrated in a lower part of FIG. 15. As one example, there is a relatively high possibility that the shape of the tip of the convex structure 81 formed mainly by the light part of the interference light having the relatively low fluence (for example, the light part with which the dark part ID is irradiated) is close to or matches the ideal shape. Therefore, the processing apparatus 1 can achieve an effect that the workpiece W can be properly processed so that the riblet structure RB having the shape that is close to or matches the ideal shape is formed.

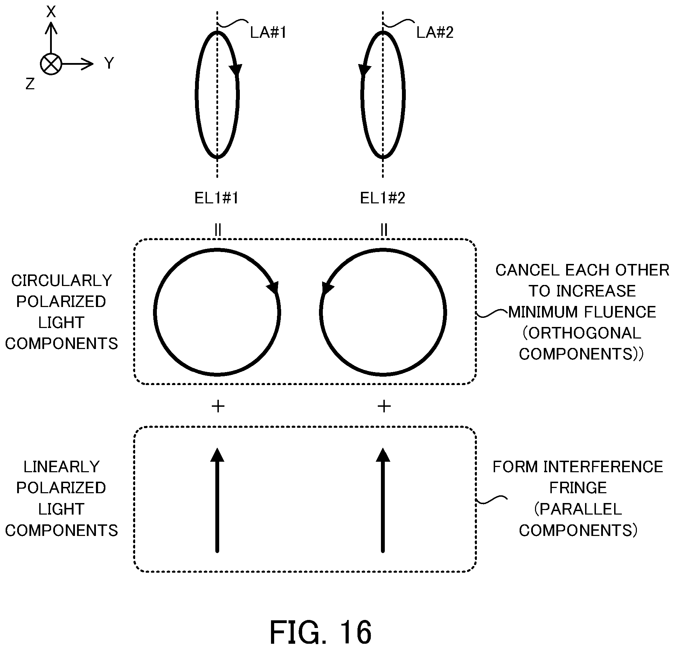

As a first example, at least one of the polarization adjustment optical systems 1114c and 1115c may adjust the polarization state of at least one of the processing lights EL1#1 and EL1#2 so that a first polarization condition is satisfied. The first polarization condition may include a first elliptically polarized light condition that each of the processing lights EL1#1 and EL1#2 is elliptically polarized light, as illustrated in a first row of FIG. 16. Furthermore, the first polarization condition may include, in addition to the first elliptically change condition, a first rotational direction condition that a rotational direction of the processing light EL1#1 (namely, a rotational direction of an end point of an electromagnetic field vector of the processing light EL1#1) is different from (namely, is opposite to) a rotational direction of the processing light EL1#2 (namely, a rotational direction of an end point of an electromagnetic field vector of the processing light EL1#2) in a plane intersecting the processing lights EL1#1 and EL1#2 (for example, the surface of the workpiece W), as illustrated in the first row of FIG. 16. Furthermore, the first polarization condition may include, in addition to the first elliptically change condition and the first rotational direction condition, a first major axis condition that a direction of a major axis LA#1 of an ellipse representing a trajectory of the end point of the electromagnetic field vector of the processing light EL1#1 is the same as (namely, parallel to) a direction of a major axis LA#2 of an ellipse representing a trajectory of the end point of the electromagnetic field vector of the processing light EL1#2 in a plane intersecting the processing lights EL1#1 and EL1#2 (for example, the surface of workpiece W), as illustrated in the first row of FIG. 16. Incidentally, the first row of FIG. 16 illustrates the trajectory of the end point of the electromagnetic field vector of processing light EL1#1 and the trajectory of the end point of the electromagnetic field vector of processing light EL1#2.

Here, as illustrated in second and third rows of FIG. 16, each of the processing lights EL1#1 and EL1#2, which is the elliptically polarized light, may be considered to include a circularly polarized light component and a linearly polarized light component. Here, in a case where the first polarization condition is satisfied, a direction of an oscillation of the linearly polarized light component included in the processing light EL1#1 is the same as a direction of an oscillation of the linearly polarized light component included in the processing light EL1#2, because the direction of the major axis LA#1 is the same as the direction of the major axis LA#2 are aligned. Furthermore, an orientation of the oscillation of the linearly polarized light component included in the processing light EL1#1 is the same as an orientation of the oscillation of the linearly polarized light component included in the processing light EL1#2. Therefore, the linearly polarized light component included in the processing light EL1#1 and the linearly polarized light component included in the processing light EL1#2 are parallel components that are parallel to each other (in other words, parallel components that do not cancel each other). As a result, the linearly polarized light component included in the processing light EL1#1 and the linearly polarized light component included in the processing light EL1#2 interfere with each other to form the interference fringe IS on the surface of the workpiece W. On the other hand, in a case where the first polarization condition is satisfied, a rotational direction of the circularly polarized light component included in the processing light EL1#1 is different from a rotational direction of the circularly polarized light component included in the processing light EL1#2, because the rotational direction of the processing light EL1#1 is different from the rotational direction of the processing light EL1#2. Namely, the circularly polarized light component included in the processing light EL1#1 and the circularly polarized light component included in the processing light EL1#2 are orthogonal components that are orthogonal to each other (in other words, orthogonal components that cancel each other). As a result, the circularly polarized light component included in the processing light EL1#1 and the circularly polarized light component included in the processing light EL1#2 cancel each other on the surface of the workpiece W. As a result, the circularly polarized light components included in the processing lights EL1#1 and EL1#2 do not contribute to the formation of the interference fringe IS (namely, the formation of the bright part IL and the dark part ID), but are included in the interference light as the light components to increase the minimum fluence (what we call the DC components). Therefore, it can be said that the circularly polarized light component included in each of the processing lights EL1#1 and EL1#2 mainly contributes to increasing the minimum fluence to achieve the above-described effect in a case where the first polarization condition is satisfied.

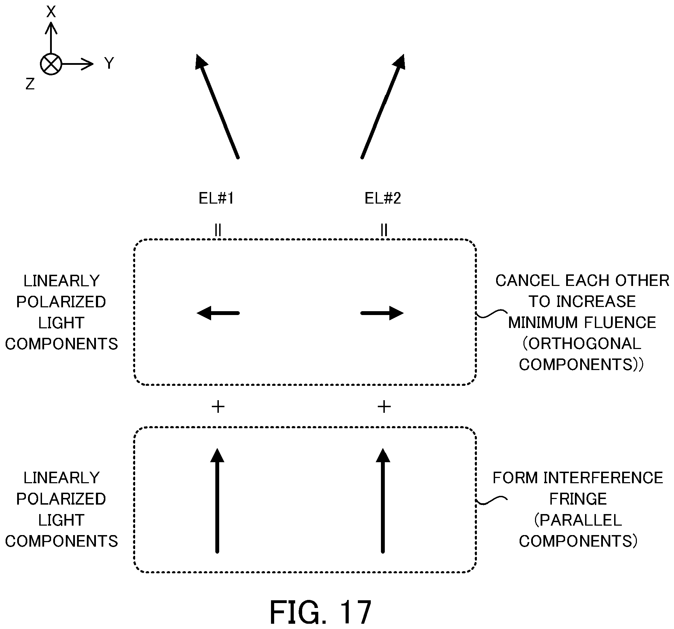

As a second example, at least one of the polarization adjustment optical system 1114c and 1115c may adjust the polarization state of at least one of the processing lights EL1#1 and EL1#2 so that a second polarization condition is satisfied. The second polarization condition may include a second linearly polarized light condition that each of the processing lights EL1#1 and EL1#2 is linearly polarized light, as illustrated in a first row of FIG. 17. Furthermore, the second polarization condition may include, in addition to the second linearly polarized light condition, a second oscillation direction condition that a direction of an oscillation of the processing light EL1#1 is not parallel to a direction of an oscillation of the processing light EL1#2 in a plane intersecting the processing lights EL1#1 and EL1#2 (for example, the surface of workpiece W), as illustrated in a first row of FIG. 17. Namely, the second polarization condition may include a second oscillation direction condition that a direction of a line segment representing the trajectory of the end point of the electromagnetic field vector of the processing light EL1#1 is not parallel to a direction of a line segment representing the trajectory of the end point of the electromagnetic field vector of the processing light EL1#2 in the plane intersecting the processing lights EL1#1 and EL1#2 (for example, the surface of the workpiece W). Incidentally, the first row of FIG. 17 illustrates the trajectory of the end point of the electromagnetic field vector of processing light EL1#1 and the trajectory of the end point of the electromagnetic field vector of processing light EL1#2.

Here, as illustrated in second and third rows of FIG. 17, each of the processing lights EL1#1 and EL1#2, which is the linearly polarized light, may be considered to include a first linearly polarized light component that oscillates along a first oscillation direction and a second linearly polarized light component that oscillates along the first oscillation direction in the plane intersecting the processing lights EL1#1 and EL1#2 (for example, the surface of workpiece W). Here, in a case where the second polarization condition is satisfied, the direction of the oscillation of the first linearly polarized light component included in the processing light EL1#1 is the same as the direction of the oscillation of the first linearly polarized light component included in the processing light EL1#2. In an example illustrated in FIG. 17, the direction of the oscillation of the first linearly polarized light component that is included in the processing light EL1#1 and that oscillates along the X-axis direction is the same as the direction of the oscillation of the first linearly polarized light component that is included in the processing light EL1#2 and that oscillates along the X-axis direction. Furthermore, an orientation of the oscillation of the first linearly polarized light component included in the processing light EL1#1 is the same as an orientation of the oscillation of the first linearly polarized light component included in the processing light EL1#2. Therefore, the first linearly polarized light component included in the processing light EL1#1 and the first linearly polarized light component included in the processing light EL1#2 are parallel components that are parallel to each other. As a result, the first linearly polarized light component included in the processing light EL1#1 and the first linearly polarized light component included in the processing light EL1#2 interfere with each other to form the interference fringe IS on the surface of the workpiece W. On the other hand, in a case where the second polarization condition is satisfied, although the direction of the oscillation of the second linearly polarized light component included in the processing light EL1#1 is the same as the direction of the oscillation of the second linearly polarized light component included in the processing light EL1#2, an orientation of the oscillation of the second linearly polarized light component included in the processing light EL1#1 is opposite to an orientation of the oscillation of the second linearly polarized light component in the processing light EL1#2. In the example illustrated in FIG. 17, the orientation of oscillation of the second linearly polarized light component that is included in the processing light EL1#1 and that oscillates along the Y-axis direction is opposite to the orientation of oscillation of the second linearly polarized light component that is included in the processing light EL1#2 and that oscillates along the Y-axis direction. For example, when the second linearly polarized light component included in the processing light EL1#1 oscillates so that the electromagnetic field vector is oriented toward the -Y side, the second linearly polarized light component included in the processing light EL1#2 oscillates so that the electromagnetic field vector is oriented toward the +Y side. Similarly, when the second linearly polarized light component included in the processing light EL1#1 oscillates so that the electromagnetic field vector is oriented toward the +Y side, the second linearly polarized light component included in the processing light EL1#2 oscillates so that the electromagnetic field vector is oriented toward the -Y side. Therefore, the second linearly polarized light component included in the processing light EL1#1 and the second linearly polarized light component included in the processing light EL1#2 are orthogonal components that are orthogonal to each other. As a result, the second linearly polarized light component included in the processing light EL1#1 and the second linearly polarized light component included in the processing light EL1#2 cancel each other on the surface of the workpiece W. As a result, the second linearly polarized light components included in the processing lights EL1#1 and EL1#2 do not contribute to the formation of the interference fringe IS (namely, the formation of the bright part IL and the dark part ID), but are included in the interference light as the light components to increase the minimum fluence (what we call the DC components). Therefore, it can be said that the second linearly polarized light component included in in each of the processing lights EL1#1 and EL1#2 mainly contributes to increasing the minimum fluence to achieve the above-described effect in a case where the second polarization condition is satisfied.

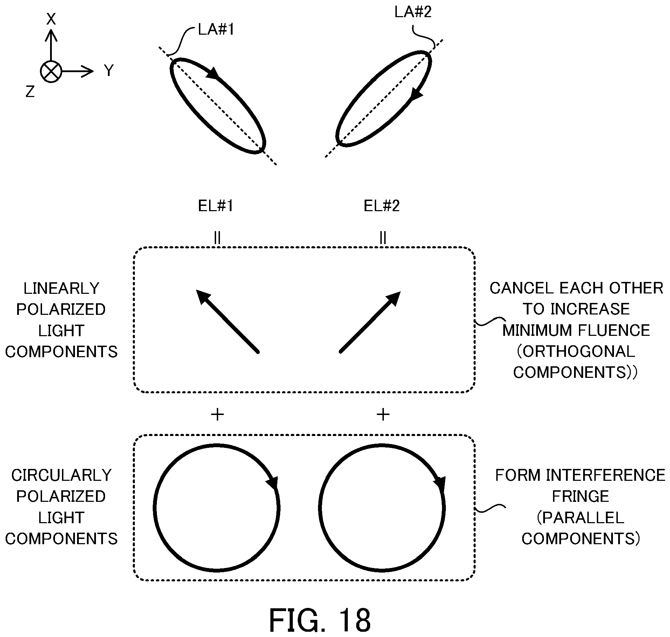

As a third example, at least one of the polarization adjustment optical system 1114c and 1115c may adjust the polarization state of at least one of the processing lights EL1#1 and EL1#2 so that a third polarization condition is satisfied. The third polarization condition may include a third elliptically polarized light condition that each of the processing lights EL1#1 and EL1#2 is elliptically polarized light, as illustrated in a first row of FIG. 18. Furthermore, the third polarization condition may include, in addition to the third elliptically polarized light condition, a third rotational direction condition that the rotational direction of the processing light EL1#1 (namely, the rotational direction of the end point of an electromagnetic field vector of the processing light EL1#1) is the same as the rotational direction of the processing light EL1#2 (namely, the rotational direction of the end point of an electromagnetic field vector of the processing light EL1#2) in a plane intersecting the processing lights EL1#1 and EL1#2 (for example, the surface of the workpiece W), as illustrated in the first row of FIG. 18. Furthermore, the third polarization condition may include, in addition to the third elliptically polarized light condition and the third rotational direction condition, a third major axis condition that the direction of the major axis LA#1 of the ellipse representing the trajectory of the end point of the electromagnetic field vector of processing light EL1#1 is not parallel to the direction of the major axis LA#2 of the ellipse representing the trajectory of the end point of the electromagnetic field vector of the processing light EL1#2 in a plane intersecting the processing lights EL1#1 and EL1#2 (for example, the surface of workpiece W), as illustrated in the first row of FIG. 18. Incidentally, the first row of FIG. 18 illustrates the trajectory of the end point of the electromagnetic field vector of processing light EL1#1 and the trajectory of the end point of the electromagnetic field vector of processing light EL1#2.

Here, as illustrated in second and third rows of FIG. 18, each of the processing lights EL1#1 and EL1#2, which is the elliptically polarized light, may be considered to include a circularly polarized light component and a linearly polarized light component. Here, in a case where the third polarization condition is satisfied, the rotational direction of the circularly polarized light component included in the processing light EL1#1 is the same as the rotational direction of the circularly polarized light component included in the processing light EL1#2, because the rotational direction of the processing light EL1#1 the same as the rotational direction of the processing light EL1#2. Therefore, the circularly polarized light component included in the processing light EL 1#1 and the circularly polarized light component included in the processing light EL1#2 are parallel components that are parallel to each other. As a result, the circularly polarized light component included in the processing light EL1#1 and the circularly polarized light component included in the processing light EL1#2 interfere with each other to form the interference fringe IS on the surface of the workpiece W. On the other hand, in a case where the third polarization condition is satisfied, although the direction of the major axis LA#1 is not parallel to the direction of the major axis LA#2, the direction of the oscillation of the linearly polarized light component included in the processing light EL1#1 is not parallel to the direction of the oscillation of the linearly polarized light component included in the processing light EL1#2. Namely, the linearly polarized light component included in the processing light EL1#1 and the linearly polarized light component included in the processing light EL1#2 satisfy the above-described second polarization condition. Therefore, the linearly polarized light component included in the processing light EL1#1 and the linearly polarized light component included in the processing light EL1#2 include orthogonal components. As a result, the linearly polarized light component included in the processing light EL1#1 and the linearly polarized light component included in the processing light EL1#2 (especially, the orthogonal component that are orthogonal to each other) cancel each other on the surface of the workpiece W. As a result, the linearly polarized light components in the processing lights EL1#1 and EL1#2 (especially, the orthogonal components that are orthogonal to each other) do not contribute to the formation of interference fringe IS (namely, the formation of bright part IL and dark part ID), but are included in the interference light as the light components to increase the minimum fluence (what we call the DC components). Therefore, it can be said that the linearly polarized light component included in each of the processing lights EL1#1 and EL1#2 mainly contributes to increasing the minimum fluence to achieve the above-described effect in a case where the third polarization condition is satisfied.

It can be said that each of the first to third polarization conditions described above is one example of a fourth polarization condition that a first type of polarized light component included in the processing light EL1#1 and a first type of polarized light component included in the processing light EL1#2 are orthogonal components that are orthogonal to each other (namely, that cancel each other), and a second type of polarized light component included in the processing light EL1#1 and a second type of polarized light component included in the processing light EL1#2 are parallel components that are parallel to each other (namely, that strengthen each other). Therefore, the processing optical system 111c may adjust the polarization state of at least one of the processing lights EL1#1 and EL1#2 so that the fourth polarization condition is satisfied.

The fourth polarization condition may further include a condition that an amount (for example, an intensity) of the first type of polarized light component included in the processing light EL1#1 is equal to an amount (for example, an intensity) of the first type of polarized light component included in the processing light EL1#2, and a condition that an amount (for example, an intensity) of the second type of polarized light component included in the processing light EL1#1 is equal to an amount (for example, an intensity) of the second type of polarized light component included in the processing light EL1#2. In this case, even in a case where the workpiece W is irradiated with the processing lights EL1#1 and EL1#2 whose converged positions are set at a position that is away from the surface of the workpiece W, no asymmetric component is generated in the orthogonal components that are orthogonal to each other, and no asymmetric component is generated in the parallel components that are parallel to each other. Namely, even in a case where the workpiece W is irradiated with the processing lights EL1#1 and EL1#2 in a defocused state, no asymmetric component is generated in the orthogonal components that are orthogonal to each other, and no asymmetric component is generated in the parallel components that are parallel to each other. Therefore, the fact remains that the parallel components that are parallel to each other interfere with each other to form the interference fringe IS, and the orthogonal components that are orthogonal to each other cancel each other to increase the minimum fluence. Therefore, even in a case where the processing lights EL1#1 and EL1#2 are in the defocused state, the processing apparatus 1 can achieve the above-described effect that the workpiece W can be properly processed so that the riblet structure RB having the shape that is close to or matches the ideal shape is formed.

The polarization adjustment optical system 1114c may be configured to change an adjustment degree of the polarization state of the processing light EL1#1. The polarization adjustment optical system 1114c may be configured to change the difference in polarization provided between the processing lights EL1#1 and EL1#2 by changing the adjustment degree of the polarization state of the processing light EL1#1. When the difference in polarization provided between the processing lights EL1#1 and EL1#2 is changed, the fluence distribution of the interference light changes. In this case, the processing apparatus 1 may adjust (in other words, control or change) the shape of the riblet structure RB accordingly by changing the difference in polarization provided between the processing lights EL1#1 and EL1#2 to change the fluence distribution of the interference light. In this case, the processing apparatus 1 can achieve an effect that the workpiece W can be properly processed so that the riblet structure RB having the shape that is close to or matches the ideal shape is formed, even in a case where the ideal shape changes, as described above.

The polarization adjustment optical system 1115c may be configured to change an adjustment degree of the polarization state of the processing light EL1#2. The polarization adjustment optical system 1115c may be configured to change the difference in polarization provided between the processing lights EL1#1 and EL1#2 by changing the adjustment degree of the polarization state of the processing light EL1#2. When the difference in polarization provided between the processing lights EL1#1 and EL1#2 is changed, the fluence distribution of the interference light changes. In this case, the processing apparatus 1 may adjust (in other words, control or change) the shape of the riblet structure RB accordingly by changing the difference in polarization provided between the processing lights EL1#1 and EL1#2 to change the fluence distribution of the interference light. In this case, the processing apparatus 1 can achieve an effect that the workpiece W can be properly processed so that the riblet structure RB having the shape that is close to or matches the ideal shape is formed, even in a case where the ideal shape changes, as described above.

However, the polarization adjustment optical system 1114c may not be configured to change the adjustment degree of the polarization state of the processing light EL1#1. The polarization adjustment optical system 1114c may not be configured to change the difference in polarization provided between the processing lights EL1#1 and EL1#2. In this case, the polarization adjustment optical system 1114c may provide a fixed difference in polarization between the processing lights EL1#1 and EL1#2. Even in this case, as long as the difference in polarization is provided between the processing lights EL1#1 and EL1#2, the processing apparatus 1 can still achieve an effect that the workpiece W can be properly processed so that the riblet structure RB having the shape that is close to or matches the ideal shape is formed.

Moreover, the polarization adjustment optical system 1115c may not be configured to change the adjustment degree of the polarization state of the processing light EL1#2. The polarization adjustment optical system 1115c may not be configured to change the difference in polarization provided between the processing lights EL1#1 and EL1#2. In this case, the polarization adjustment optical system 1115c may provide a fixed difference in polarization between the processing lights EL1#1 and EL1#2. Even in this case, as long as the difference in polarization is provided between the processing lights EL1#1 and EL1#2, the processing apparatus 1 can still achieve an effect that the workpiece W can be properly processed so that the riblet structure RB having the shape that is close to or matches the ideal shape is formed.

Incidentally, the processing optical system 111c may include one of the polarization adjustment optical systems 1114c and 1115c but may not include the other one of the polarization adjustment optical systems 1114c and 1115c. Namely, the processing optical system 111c may not necessarily include both of the polarization adjustment optical systems 1114c and 1115c.

### (2-5) Modified Example of Processing Optical System 111

Next, a modified example of the processing optical system 111 will be described.

### (2-5-1) Modified Example of Processing Optical System 111a

In the above-described description, the processing optical system 111a provides the difference in intensity between the processing lights EL1#1 and EL1#2 by using the beam splitter 1111a. However, the processing optical system 111a may provide the difference in intensity between the processing lights EL1#1 and EL1#2 without using the beam splitter 1111a. Next, a first modified example and a second modified example of the processing optical system 111a will be described in sequence as examples of the processing optical system 111a that provides the difference in intensity between the processing lights EL1#1 and EL1#2 without using the beam splitter 1111a.

### (2-5-1-1) First Modified Example of Processing Optical System 111a

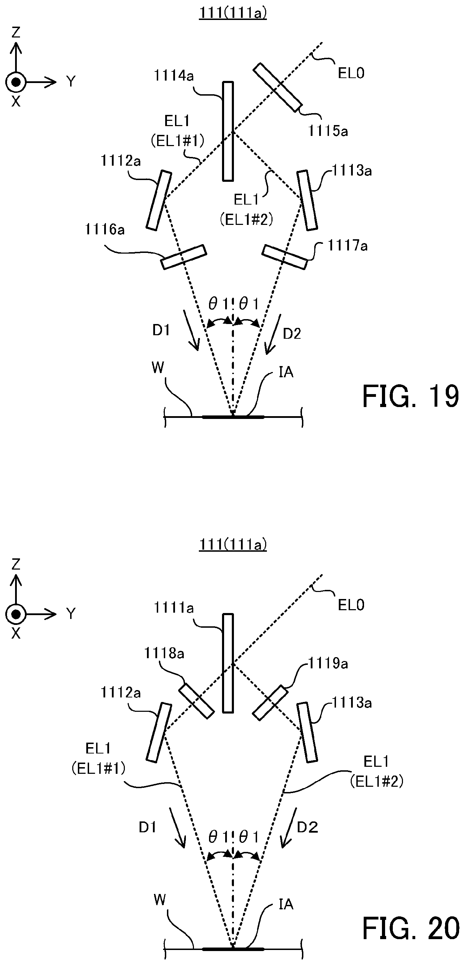

As illustrated in FIG. 19 that is a cross-sectional view illustrating a configuration of the first modified example of the processing optical system 111a, the processing optical system 111a may include a polarization beam splitter 1114a and wave plate 1115a in addition to or instead of the beam splitter 1111a in the first modified example. In this case, the processing optical system 111a may provide the difference in intensity between the processing lights EL1#1 and EL1#2 by using the polarization beam splitter 1114a and the wave plate 1115a.

Specifically, the processing light EL0 emitted from the processing light source 2 enters the wave plate 1115a. The wave plate 1115a adjusts the polarization state of the processing light EL0 passing through the wave plate 1115a. Specifically, the wave plate 1115a adjusts a polarization direction of the processing light EL0 passing through the wave plate 1115a. The wave plate 1115a sets a ratio of s-polarized light and p-polarized light included in the processing light EL0 to a desired ratio by adjusting the polarization direction of the processing light EL0.

The processing light EL0 that has passed through the wave plate 1115a enters the polarization beam splitter 1114a. The p-polarized light included in the processing light EL0 passes through the polarization beam splitter 1114a as the processing light EL1#1. On the other hand, the s-polarized light included in the processing light EL0 is reflected by the polarization beam splitter 1114a as the processing light EL1#2. Therefore, the polarization beam splitter 1114a may be referred to as a dividing optical system.

The processing lights EL1#1 and EL1#2 emitted from the polarization beam splitter 1114a enter the mirrors 1112a and 1113a, respectively. As a result, even in the first modified example, the interference area IA set on the workpiece W is irradiated with the processing light EL1#1 that has been reflected by the mirror 1112a and the processing light EL1#2 that has been reflected by the mirror 1113a. Therefore, the interference light generated by the interference between the processing lights EL1#1 and EL1#2 forms the interference fringe IS in the interference area IA. In this case, the polarization beam splitter 1114a, the mirror 1112a and the mirror 1113a may be considered to serve as an interference optical system for forming the interference fringe IS.

Here, as described above, the wave plate1115a adjusts sets the ratio of the s-polarized light and the p-polarized light included in the processing light EL0 to the desired ratio by adjusting the polarization direction of the processing light EL0. Namely, the wave plate1115a sets the ratio of the s-polarized light and the p-polarized light, which are generated by the polarization beam splitter 1114a dividing the processing light EL0, to the desired ratio by adjusting the polarization direction of the processing light EL0. A ratio of the intensity of the processing light EL1#1 that has passed through the polarization beam splitter 1114a and the intensity of the processing light EL1#2 that has been reflected by the polarization beam splitter 1114a is a ratio that depends on the ratio of the s-polarized light and the p-polarized light included in the processing light EL0. Therefore, in order to provide the difference in intensity between the processing lights EL1#1 and EL1#2, the wave plate1115a may set the ratio of the s-polarized light and the p-polarized light included in the processing light EL0 passing through the wave plate1115a to the desired ratio that is larger than or smaller than 1. In this case, the polarization beam splitter 1114a and the wave plate1115a may be considered to serve as an adjustment optical system or an intensity adjustment member for providing the difference in intensity between the processing lights EL1#1 and EL1#2 (namely, for adjusting the intensity of at least one of the processing lights EL1#1 and EL1#2).

In a case where the intensity of the processing light EL1#1 that has passed through the polarization beam splitter 1114a is different from the intensity of the processing light EL1#2 that has been reflected by the polarization beam splitter 1114a as described above, the intensity of the processing light EL1#1 on the surface of the workpiece W is different from the intensity of the processing light EL1#2 on the surface of the workpiece W. Therefore, even in the first modified example, the processing apparatus 1 can achieve an effect that the workpiece W can be properly processed so that the riblet structure RB having the shape that is close to or matches the ideal shape is formed, as described above.

The wave plate1115a may change the ratio of the s-polarized light and the p-polarized light included in the processing light EL0 by rotating around an axis along a propagating direction of the processing light EL0. Namely, wave plate1115a may change the ratio of the s-polarized light and the p-polarized light included in the processing light EL0 by rotating around the axis along the propagating direction of the processing light EL0. When the ratio of the s-polarization and the p-polarization included in the processing light EL0 is changed, the ratio of the intensities of the processing lights EL1#1 and EL1#2 emitted from the polarization beam splitter 1114a is changed. As a result, the wave plate1115a may be considered to change the adjustment degree of the intensities of the processing lights EL1#1 and EL1#2. Namely, the wave plate1115a may change the difference in intensity provided between the processing lights EL1#1 and EL1#2. As a result, even in the first modified example, the processing apparatus 1 can achieve an effect that the workpiece W can be properly processed so that the riblet structure RB having the shape that is close to or matches the ideal shape is formed, even in a case where the ideal shape changes, as described above.

However, the wave plate1115a may not be rotatable. The wave plate1115a may not change the difference in intensity provided between the processing lights EL1#1 and EL1#2. In this case, the wave plate1115a may set the ratio of the s-polarized light and the p-polarized light included in the processing light EL0 to a fixed desired ratio (for example, a desired ratio that is larger than or smaller than 1). Even in this case, as long as the difference in intensity is provided between the processing lights EL1#1 and EL1#2, the processing apparatus 1 can still achieve an effect that the workpiece W can be properly processed so that the riblet structure RB having the shape that is close to or matches the ideal shape is formed.

In the first modified example, the processing optical system 111a may further include a wave plate1116a and a wave plate1117a. The wave plate1116a is disposed on an optical path of the processing light EL1#1 between the polarization beam splitter 1114a and the workpiece W. The wave plate1117a is disposed on an optical path of the processing light EL1#2 between the polarization beam splitter 1114a and the workpiece W. At least one of the wave plates 1116a and 1117a may adjust the polarization state of at least one of the processing lights EL1#1 and EL1#2 so that the polarization state of the processing light EL1#1 with which the workpiece W is irradiated is the same as the polarization state of the processing light EL1#2 with which the workpiece W is irradiated. At least one of the wave plates 1116a and 1117a may adjust the polarization state of at least one of the processing lights EL1#1 and EL1#2 so that the polarization state of the processing light EL1#1 with which the workpiece W is irradiated and the polarization state of the processing light EL1#2 with which the workpiece W is irradiated are desired states. One of 1/2 wave plate and 1/4 wave plate may be used as the wave plate1116a, and the other one of the 1/2 wave plate and the 1/4 wave plate may be used as the wave plate 1117a.

### (2-5-1-2) Second Modified Example of Processing Optical System 111a

As illustrated in FIG. 20 that is a cross-sectional view illustrating a configuration of the second modified example of the processing optical system 111a, the processing optical system 111a may further include an intensity adjustment element 1118a and an intensity adjustment element 1119a in the second modified example. In this case, the processing optical system 111a may provide the difference in intensity between the processing lights EL1#1 and EL1#2 by using the intensity adjustment elements 1118a and 1119a.

Specifically, the intensity adjustment element 1118a is disposed on the optical path of the processing light EL1#1 emitted from the beam splitter 1111a. The intensity adjustment element 1118a adjusts the intensity of the processing light EL1#1 entering the intensity adjustment element 1118a. On the other hand, the intensity adjustment element 1119a is disposed on the optical path of the processing light EL1#2 emitted from the beam splitter 1111a. The intensity adjustment element 1119a adjusts the intensity of the processing light EL1#2 entering the intensity adjustment element 1119a. At least one of the intensity adjustment elements 1118a and 1119a may adjust the intensity of at least one of the processing lights EL1#1 and EL1#2 so that the intensity of the processing light EL1#1 on the surface of the workpiece W is different from the intensity of the processing light EL1#2 on the surface of the workpiece W. Namely, at least one of the intensity adjustment elements 1118a and 1119a may adjust the intensity of at least one of the processing lights EL1#1 and EL1#2 so as to provide the difference in intensity between the processing lights EL1#1 and EL1#2. In this case, the intensity adjustment elements 1118a and 1119a may be considered to serve as an adjustment optical system or an intensity adjustment member for providing the difference in intensity between the processing lights EL1#1 and EL1#2 (namely, for adjusting the intensity of at least one of the processing lights EL1#1 and EL1#2). As a result, even in the second modified example, the processing apparatus 1 can achieve an effect that the workpiece W can be properly processed so that the riblet structure RB having the shape that is close to or matches the ideal shape is formed, as described above.

The intensity adjustment element 1118a may be configured to change the adjustment degree of the intensity of the processing light EL1#1. The intensity adjustment element 1118a may change the difference in intensity provided between the processing lights EL1#1 and EL1#2 by changing the adjustment degree of the intensity of the processing light EL1#1. Similarly, the intensity adjustment element 1119a may be configured to change the adjustment degree of the intensity of the processing light EL1#2. Especially, the intensity adjustment element 1119a may change the difference in intensity provided between the processing lights EL1#1 and EL1#2 by changing the adjustment degree of the intensity of the processing light EL1#2. In this case, even in the second modified example, the processing apparatus 1 can achieve an effect that the workpiece W can be properly processed so that the riblet structure RB having the shape that is close to or matches the ideal shape is formed, even in a case where the ideal shape changes, as described above. Incidentally, a liquid crystal shutter is one example of each of the intensity adjustment elements 1118a and 1119a that are configured to change the adjustment degree of the intensities of the processing lights EL1#1 and EL1#2, respectively.

However, the intensity adjustment element 1118a may not be configured to change the adjustment degree of the intensity of the processing light EL1#1. In this case, the intensity adjustment element 1118a may increase or decrease the intensity of the processing light EL1#1 by a fixed constant amount or by a fixed constant percentage. Similarly, the intensity adjustment element 1119a may not be configured to change the adjustment degree of the intensity of the processing light EL1#1. In this case, the intensity adjustment element 1119a may increase or decrease the intensity of the processing light EL1#2 by a fixed constant amount or by a fixed constant percentage. Even in this case, as long as the difference in intensity is provided between the processing lights EL1#1 and EL1#2, the processing apparatus 1 can still achieve an effect that the workpiece W can be properly processed so that the riblet structure RB having the shape that is close to or matches the ideal shape is formed. An optical filter having a predetermined transmittance with respect to the processing lights EL1#1 and EL1#2 is one example of the intensity adjustment elements 1118a and 1119a that are not configured to change the adjustment degree of the intensity of the processing lights EL1#1 and EL1#2, respectively.

Incidentally, the processing optical system 111a may include one of the intensity adjustment elements 1118a and 1119a, but may not include the other one of the intensity adjustment elements 1118a and 1119a. Namely, the processing optical system 111a may not necessarily include both of the intensity adjustment elements 1118a and 1119a.

### (2-5-2) Modified Example of Processing Optical System 111b

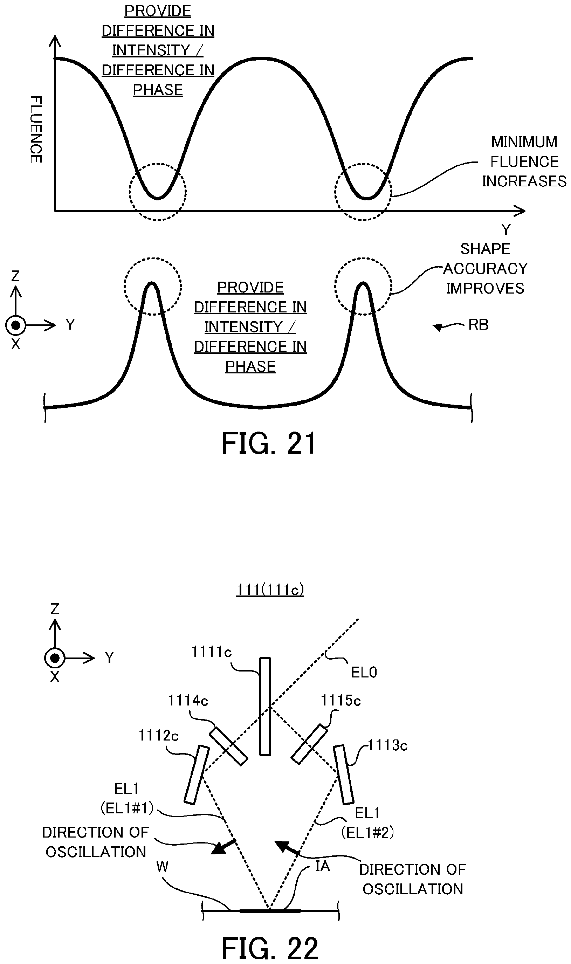

The processing optical system 111b may provide the difference in intensity between at least one of processing lights EL1#11 and EL1#12 and at least one of processing lights EL1#21 and EL 1#22, in addition to providing the difference in phase between the processing lights EL 1#11 and EL1#12 and between the processing lights EL1#21 and EL1#22. Specifically, the dividing ratio of the beam splitter 111 1b of the processing optical system 111b may be set to be a ratio that is larger than or less than 1, as with the dividing ratio of the beam splitter 111 1a of the processing optical system 111a. In this case, the processing optical system 111b adds, to the interference light, the light component that affects the fluence distribution without affecting the formation of the interference fringe IS by providing the difference in phase between the processing lights EL1#11 and EL1#12 and between the processing lights EL1#21 and EL1#22, and providing the difference in intensity between at least one of the processing lights EL1#11 and EL1#12 and at least one of the processing lights EL1#21 and EL1#22. Therefore, the minimum fluence of the interference light is higher, compared to the comparative example (see FIG. 5A) in which both of the difference in phase and the difference in intensity are not provided, as illustrated in an upper part of FIG. 21. Therefore, the accuracy of the shape of the riblet structure RB is improved, compared to the comparative example (see FIG. 5A), as illustrated in a lower part of FIG. 21. Therefore, the processing apparatus 1 can achieve an effect that the workpiece W can be properly processed so that the riblet structure RB having the shape that is close to or matches the ideal shape is formed.

### (2-5-3) Modified Example of Processing Optical System 111c

The processing optical system 111c may provide the difference in intensity between the processing lights EL1#1 and EL1#2 in addition to providing the difference in polarization between the processing lights EL1#1 and EL1#2. Specifically, the dividing ratio of the beam splitter 1111c of the processing optical system 111c may be set to be a ratio that is larger than or less than 1, as with the dividing ratio of the beam splitter 1111a of the processing optical system 111a. In this case, the processing optical system 111b adds, to the interference light, the light component that affects the fluence distribution without affecting the formation of the interference fringe IS by providing both of the difference in intensity and the difference in polarization between the processing lights EL1#1 and EL1#2. Therefore, the processing apparatus 1 can achieve an effect that the workpiece W can be properly processed so that the riblet structure RB having the shape that is close to or matches the ideal shape is formed.

The processing optical system 111c may provide the difference in phase between the processing lights EL1#1 and EL1#2 in addition to providing the difference in polarization between the processing lights EL1#1 and EL1#2. Specifically, the processing optical system 111c may include the beam splitter 1112b, the beam splitter 1113b, the mirrors 1114, and the mirrors 1115 of the processing optical system 111b, instead of the mirrors 1112a and 1113a. Furthermore, the beam splitter 11 11c of the processing optical system 111c may serve as the beam splitter 11 11b of the processing optical system 111b. In this case, the processing optical system 111b adds, to the interference light, the light component that affects the fluence distribution without affecting the formation of the interference fringe IS by providing both of the difference in phase and the difference in polarization between the processing lights EL1#1 and EL1#2. Therefore, the processing apparatus 1 can achieve an effect that the workpiece W can be properly processed so that the riblet structure RB having the shape that is close to or matches the ideal shape is formed.

The processing optical system 111c may provide all of the difference in polarization, the difference in intensity, and the difference in phases between the processing lights EL1#1 and EL1#2. Even in this case, the processing apparatus 1 can achieve an effect that the workpiece W can be properly processed so that the riblet structure RB having the shape that is close to or matches the ideal shape is formed.

The processing optical system 111c may adjust the polarization state of at least one of the processing lights EL1#1 and EL1#2 so that the polarization state of the processing light EL1#1 is the same as the polarization state of the processing light EL1#2. For example, as illustrated in FIG. 22, the processing optical system 111c may adjust the polarization state of at least one of the processing lights EL1#1 and EL1#2 so that both of the processing lights EL1#1 and EL1#2 are the p-polarized lights. The fluence distribution of the interference light generated by the interference between the processing light EL1#1 that is the p-polarized light and the processing light EL1#2 that is the p-polarized light has a characteristic that is the same as that of the fluence distribution of the interference light generated in a case where the difference in optical characteristic (for example, the difference in intensity, the difference in phase, or the difference in polarization) is provided between at least two processing lights EL 1. Namely, the processing optical system 111c can substantially add, to the interference light, the light component that affects the fluence distribution without affecting the formation of the interference fringe IS (what we call the DC component of the fluence distribution of the interference fringe IS) by allowing the processing light EL1#1 that is the p-polarized light and the processing light EL1#2 that is the p-polarized light to interfere with each other. This phenomenon is especially noticeable as the incident angle of the processing lights EL1#1 and EL1#2 to the workpiece W is larger. Therefore, even in a case where the polarization state of the processing light EL1#1 is the same as the polarization state of the processing light EL1#2, it is possible to achieve an effect that is the same as the achievable in a case where the difference in polarization is provided between the processing lights EL1#1 and EL1#2.

### (2-5-4) Modified Example common to Processing Optical Systems 111a to 111c

In the above-described description, the processing optical systems 111a to 111c divide the processing light EL0 from the processing light source 2 into the plurality of processing lights EL1 by using the beam splitters 1 1 1 1a to 11 1 1c, respectively. However, at least one of the processing optical systems 111a to 111c divide the processing light EL0 from the processing light source 2 into the plurality of processing lights EL1 by using the beam splitters 1 1 1 1a to 11 11c, respectively.

For example, at least one of the processing optical systems 111a to 111c may divide the processing light EL0 into the plurality of processing lights EL1 by using a half mirror. At least one of the processing optical systems 111a to 111c may divide the processing light EL0 into the plurality of processing lights EL1 by using a wave plate and a polarization beam splitter. At least one of the processing optical systems 111a to 111c may divide the processing light EL0 into the plurality of processing lights EL1 by using a Diffractive Optical Element (DOE). At least one of the processing optical systems 111a to 111c may divide the processing light EL0 into the plurality of processing lights EL1 by using an Acoustic Optical Modulator (AOM).

### (3) Modified Example

Next, a modified example of the processing system SYS will be described.

### (3-1) First Modified Example of Processing System SYS

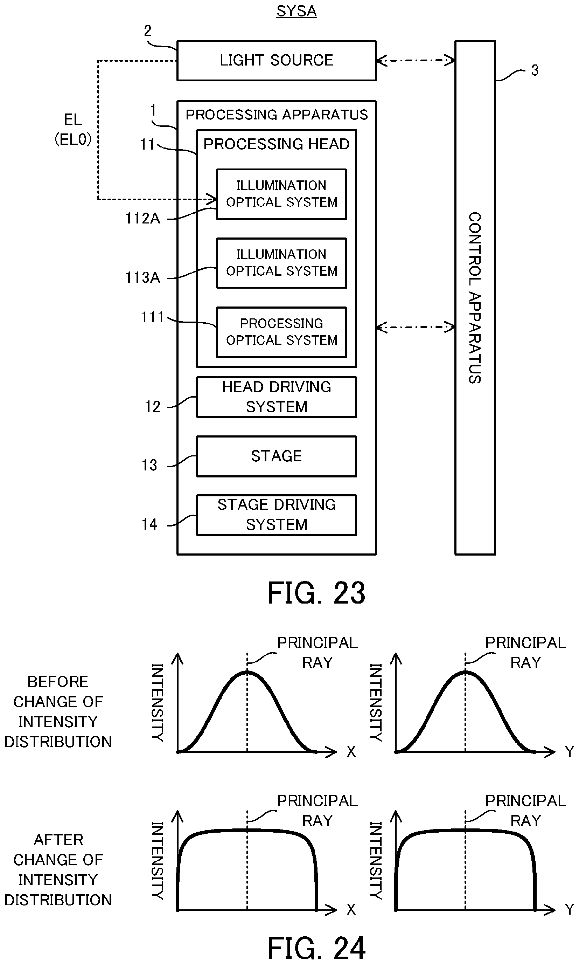

Firstly, with reference to FIG. 23, a first modified example of the processing system SYS will be described. FIG. 23 is a system configuration diagram that illustrates a system configuration of the first modified example of the processing system SYS. In the below-described description, the first modified example of the processing system SYS is referred to as a "processing system SYSA".

As illustrated in FIG. 23, the processing system SYSA in the first modified example is different from the above-described processing system SYS in that it includes a processing apparatus 1A instead of the processing apparatus 1. Other feature of the processing system SYSA may be the same as other feature of the processing system SYS. The processing apparatus 1A is different from the processing apparatus 1 in that it includes a processing head 11A instead of the processing head 11. Other feature of the processing apparatus 1A may be the same as other feature of the processing apparatus 1. The processing head 11A is different from the processing head 11 in that it further includes an illumination optical system 112A and an illumination optical system 113A. Other feature of the processing head 11A may be the same as other feature of the processing head 11.

The illumination optical systems 112A and 113A are optical systems that are configured to change an intensity distribution of the processing light EL0 so that the intensity distribution of the processing light EL0 from the processing light source 2 is a desired distribution. Specifically, the intensity distribution of the processing light EL0 emitted from the processing light source 2 is usually a Gaussian distribution in which the intensity of the processing light EL0 at a certain position is lower as the certain position in a plane intersecting the propagating direction of the processing light EL0 is farther from a principal ray of the processing light EL0, as illustrated in an upper part of FIG. 24. The intensity distribution of the processing light EL0 emitted from the processing light source 2 is usually the Gaussian distribution in which the intensity of the processing light EL0 at a certain position is higher as the certain position in the plane intersecting the propagating direction of the processing light EL0 is closer to principal ray of the processing light EL0, as illustrated in an upper part of FIG. 24. The illumination optical systems 112A and 113A may modify the intensity distribution of the processing light EL0 so that the intensity distribution of the processing light EL0, which is the Gaussian distribution, is changed to a flat distribution illustrated in a lower part of FIG. 24. The flat distribution illustrated in the lower part of FIG. 24 may be a distribution in which a variation of the intensity of the processing light EL0 in the plane intersecting the propagating direction of the processing light EL0 is smaller than that in the Gaussian distribution illustrated in the upper part of FIG. 24. The flat distribution may be a distribution in which the variation of the intensity of the processing light EL0 in the plane intersecting the propagating direction of the processing light EL0 is smaller than an allowable upper limit value.

Incidentally, in the first modified example, the description will proceed assuming that the plane intersecting the propagating direction of the processing light EL0 is a plane along the XY plane.

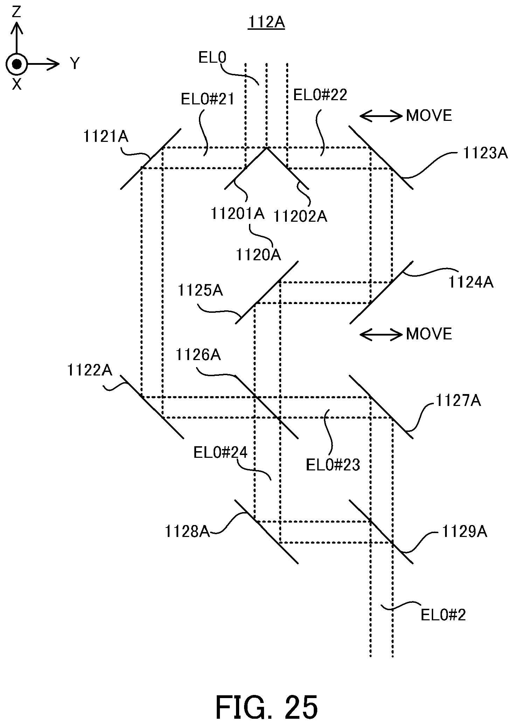

A configuration of the illumination optical system 112A is illustrated in FIG. 25. As illustrated in FIG. 25, the illumination optical system 112A includes a mirror 1120A, a mirror 1121A, a mirror 1122A, a mirror 1123A, a mirror 1124A, a mirror 1125A, a half mirror 1126A, a reflective-type of wave plate1127A, a reflective-type of wave plate1128A, and a polarization beam splitter 1129A.

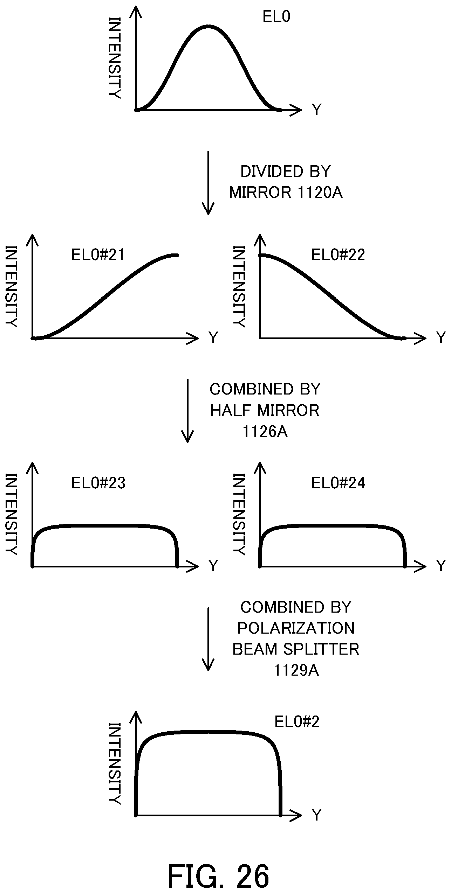

The processing light EL0 emitted from the processing light source 2 enters the mirror 1120A. In the below-described description, an example in which the processing light EL0 emitted from the processing light source 2 is circularly polarized light will be described. The mirror 1120A divides the processing light EL0 along a first division direction (in an example illustrated in FIG. 25, the Y-axis direction) that intersects the propagating direction of the processing light EL0. Specifically, the mirror 1120A includes two mirrors 11201A and 11202A that are aligned along the Y-axis direction. The mirror 11201A reflects, toward the mirror 1121A, a half of light beam at the -Y-side of the processing light EL0 as processing light EL0#21. The intensity distribution of the processing light EL0#21 is the same as a distribution at the -Y-side of the Gaussian distribution that is illustrated in a first row of FIG. 26, as illustrated in a second row of FIG. 26. Moreover, the mirror 11202A reflects, toward the mirror 1123A, a half of light beam at the +Y-side of the processing light EL0 as processing light EL0#22. The intensity distribution of the processing light EL0#22 is the same as a distribution at the +Y-side of the Gaussian distribution that is illustrated in the first row of FIG. 26, as illustrated in a second row of FIG. 26.

The processing light EL0#21 that has been reflected by the mirror 11201A enters the half mirror 1126A through the mirrors 1121A and 1122A. The processing light EL0#22 that has been reflected by the mirror 11202A enters the half mirror 1126A through the mirrors 1123A to 1125A. Apart of the processing light EL0#21 entering the half mirror 1126A passes through the half mirror 1126A. Another part of the processing light EL0#21 entering the half mirror 1126A is reflected by the half mirror 1126A. A part of the processing light EL0#22 entering the half mirror 1126A passes through the half mirror 1126A. Another part of the processing light EL0#22 entering the half mirror 1126A is reflected by the half mirror 1126A.

The half mirror 1126A emits processing light EL0#23 in which a part of the processing light EL0#21 that has passed through the half mirror 1126A and a part of the processing light EL0#22 that has been reflected by the half mirror 1126A are combined. In this case, the intensity distribution of the processing light EL0#23 is the same as a distribution that is obtained by adding the intensity distributions illustrated in the second row of FIG. 26, as illustrated in a third row of FIG. 26. However, the intensity of processing light EL0#23 is approximately half the intensities of the processing light EL0#21 and EL0#22, because a part of the processing light EL0#21 and a part of the processing light EL0#22 are combined through the half mirror 1126A.

The half mirror 1126A emits processing light EL0#24 in which a part of the processing light EL0#21 that has been reflected by the half mirror 1126A and a part of the processing light EL0#22 that has passed through the half mirror 1126A are combined. In this case, the intensity distribution of the processing light EL0#24 is the same as a distribution that is obtained by adding the intensity distributions illustrated in the second row of FIG. 26, as illustrated in the third row of FIG. 26. However, the intensity of processing light EL0#24 is approximately half the intensities of processing light EL0#21 and EL0#22, because a part of the processing light EL0#21 and a part of the processing light EL0#22 are combined through half mirror 1126A.

The processing light EL0#23 emitted from the half mirror 1126A enters the polarization beam splitter 1129A through the reflective-type of wave plate1127A. The processing light EL0#24 emitted from the half mirror 1126A enters the polarization beam splitter 1129A through the reflective-type of wave plate1128A. The reflective-type of wave plate1127A converts the processing light EL0#23, which is the circularly polarized light, to p-polarized light. The reflective-type of wave plate1128A converts the processing light EL0#24, which is the circularly polarized, to s-polarized light.

The processing light EL0#23 that has been converted to the p-polarized light passes through the polarization beam splitter 1129A. The processing light EL0#24 that has been converted to the s-polarized light is reflected by the polarization beam splitter 1129A. The polarization beam splitter 1129A emits processing light EL0#2 in which the processing light EL0#23 that has passed through the polarization beam splitter 1129A and the processing light EL0#24 that has been reflected by the polarization beam splitter 1129A are combined. In this case, the intensity distribution of the processing light EL0#2 is the same as a distribution that is obtained by adding the intensity distributions illustrated in the third row of FIG. 26, as illustrated in a fourth row of FIG. 26.

In this case, the mirrors 1123A and 1124A may adjust an optical path length of the processing light EL0#22 so that the processing light EL0#2 emitted from the illumination optical system 112A is circularly polarized light. Specifically, the mirrors 1123A and 1124A may be movable to adjust the optical path length of the processing light EL0#22.

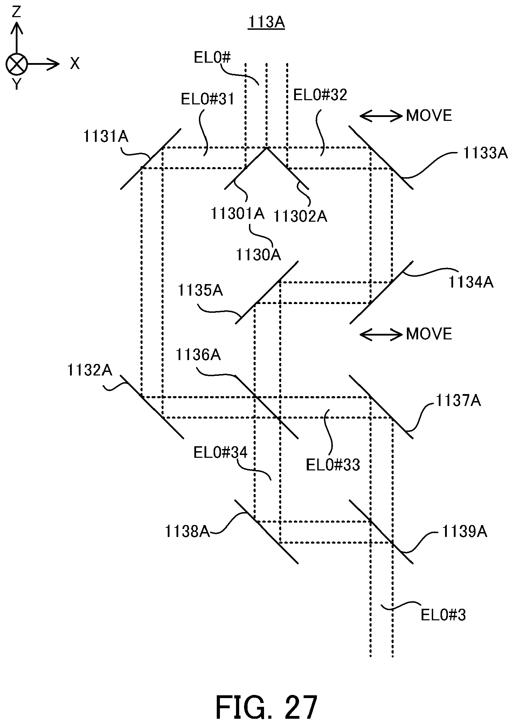

In this manner, the illumination optical system 112A changes the intensity distribution of the processing light EL0 so that the intensity distribution of the processing light EL0 whose intensity distribution in the Y-axis direction is the Gaussian distribution is changed to the flat distribution in the Y-axis direction. Namely, the illumination optical system 112A emits the processing light EL0#2 whose intensity distribution in the Y-axis direction is the flat distribution. On the other hand, the intensity distribution in the X-axis direction of the processing light EL0#2 emitted from the illumination optical system 112A remains the Gaussian distribution. Therefore, the illumination optical system 113A changes the intensity distribution of the processing light EL0#2 so that the intensity distribution of the processing light EL0#2 emitted from the illumination optical system 112A is the flat in the X-axis direction. For this purpose, as illustrated in FIG. 27, the illumination optical system 113A includes a mirror 1130A, a mirror 1131A, a mirror 1132A, a mirror 1133A, a mirror 1134A, a mirror 1135A, a half mirror 1136A, a reflective-type of wave plate1137A, a reflective-type of wave plate1138A, a polarization beam splitter 1139A.

The illumination optical system 113A may be the same as an optical system obtained by rotating the illumination optical system 112A around the Z-axis by 90 degrees. Namely, the mirror 1120A, the mirror 1121A, the mirror 1122A, the mirror 1123A, the mirror 1124A, the mirror 1125A, the half mirror 1126A, the reflective-type of wave plate 1127A, the reflective-type of wave plate 1128, and the polarization beam splitter 1129A included in the an optical system obtained by rotating the illumination optical system 112A around the Z-axis by 90 degrees may be used as the mirror 1130A, the mirror 1131A, the mirror 1132A, the mirror 1133A, the mirror 1134A, the mirror 1135A, the half mirror 1136A, the reflective-type of wave plate1137A, the reflective-type of wave plate 1138, and the polarization beam splitter 1139A of the illumination optical system 113A.

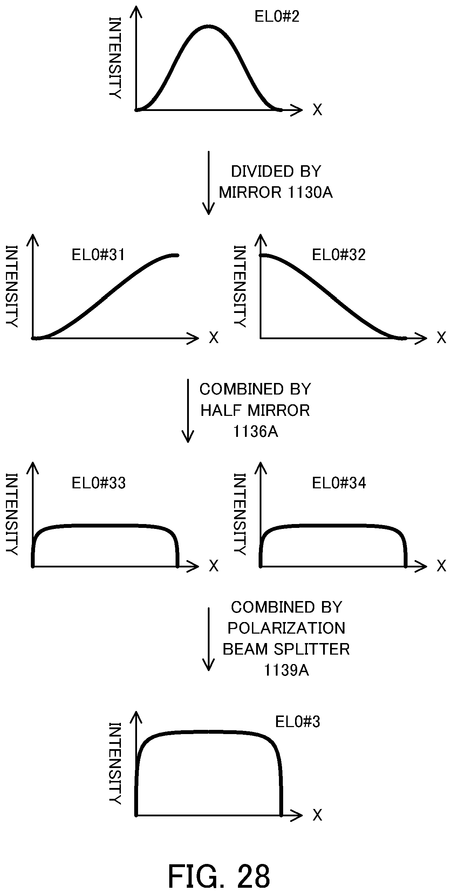

Specifically, the mirror 1130A divides the processing light EL0#2, which has been emitted from the illumination optical system 112A, along a second division direction (in an example illustrated in FIG. 27, the X-axis direction) that intersects the propagating direction of the processing light EL0. Specifically, the mirror 1130A includes two mirrors 11301A and 11302A that are aligned along the X-axis direction. The mirror 11301A reflects, toward the mirror 1131A, a half of light beam at the -X-side of the processing light EL0#2 as processing light EL0#31. The intensity distribution of the processing light EL0#31 is the same as a distribution at the -X-side of the Gaussian distribution that is illustrated in a first row of FIG. 28, as illustrated in a second row of FIG. 28. Moreover, the mirror 11302A reflects, toward the mirror 1133A, a half of light beam at the +X-side of the processing light EL0#2 as processing light EL0#32. The intensity distribution of the processing light EL0#32 is the same as a distribution at the +X-side of the Gaussian distribution that is illustrated in the first row of FIG. 28, as illustrated in a second row of FIG. 28.

The processing light EL0#31 that has been reflected by the mirror 11301A enters the half mirror 1136A through the mirrors 1131A and 1122A. The processing light EL0#32 that has been reflected by the mirror 11302A enters the half mirror 1136A through the mirrors 1133A to 1135A. The half mirror 1136A emits processing light EL0#33 in which a part of the processing light EL0#31 that has passed through the half mirror 1136A and a part of the processing light EL0#32 that has been reflected by the half mirror 1136A are combined, as with the half mirror 1126A. In this case, the intensity distribution of the processing light EL0#33 is the same as a distribution that is obtained by adding the intensity distributions illustrated in the second row of FIG. 28, as illustrated in a third row of FIG. 28. However, the intensity of processing light EL0#33 is approximately half the intensities of the processing light EL0#31 and EL0#32, because a part of the processing light EL0#31 and a part of the processing light EL0#32 are combined through the half mirror 1136A. Moreover, the half mirror 1136A emits processing light EL0#34 in which a part of the processing light EL0#31 that has been reflected by the half mirror 1136A and a part of the processing light EL0#32 that has passed through the half mirror 1136A are combined. In this case, the intensity distribution of the processing light EL0#34 is the same as a distribution that is obtained by adding the intensity distributions illustrated in the second row of FIG. 28, as illustrated in the third row of FIG. 28. However, the intensity of processing light EL0#34 is approximately half the intensities of processing light EL0#31 and EL0#32, because a part of the processing light EL0#31 and a part of the processing light EL0#32 are combined through half mirror 1136A.

The processing light EL0#33 emitted from the half mirror 1136A enters the polarization beam splitter 1139A through the reflective-type of wave plate1137A. The processing light EL0#34 emitted from the half mirror 1136A enters the polarization beam splitter 1139A through the reflective-type of wave plate1138A. The reflective-type of wave plate1137A converts the processing light EL0#33, which is the circularly polarized light, to p-polarized light. The reflective-type of wave plate1138A converts the processing light EL0#34, which is the circularly polarized, to s-polarized light. The polarization beam splitter 1139A emits processing light EL0#3 in which the processing light EL0#33 that has passed through the polarization beam splitter 1139A and the processing light EL0#34 that has been reflected by the polarization beam splitter 1139A are combined. In this case, the intensity distribution of the processing light EL0#3 is the same as a distribution that is obtained by adding the intensity distributions illustrated in the third row of FIG. 28, as illustrated in a fourth row of FIG. 28.

In this case, the mirrors 1133A and 1134A may adjust an optical path length of the processing light EL0#32 so that the processing light EL0#3 emitted from the illumination optical system 113A is circularly polarized light. Specifically, the mirrors 1133A and 1134A may be movable to adjust the optical path length of the processing light EL0#32.

In this manner, the illumination optical system 113A changes the intensity distribution of the processing light EL0#2 so that the intensity distribution of the processing light EL0#2 whose intensity distribution in the X-axis direction is the Gaussian distribution is changed to the flat distribution in the X-axis direction. As a result, the intensity distribution of the processing light EL0#3 emitted from the illumination optical system 113A is the flat distribution in both of the X-axis direction and the Y-axis direction. In the first modified example, this processing light EL0#3 enters the processing optical system 111.

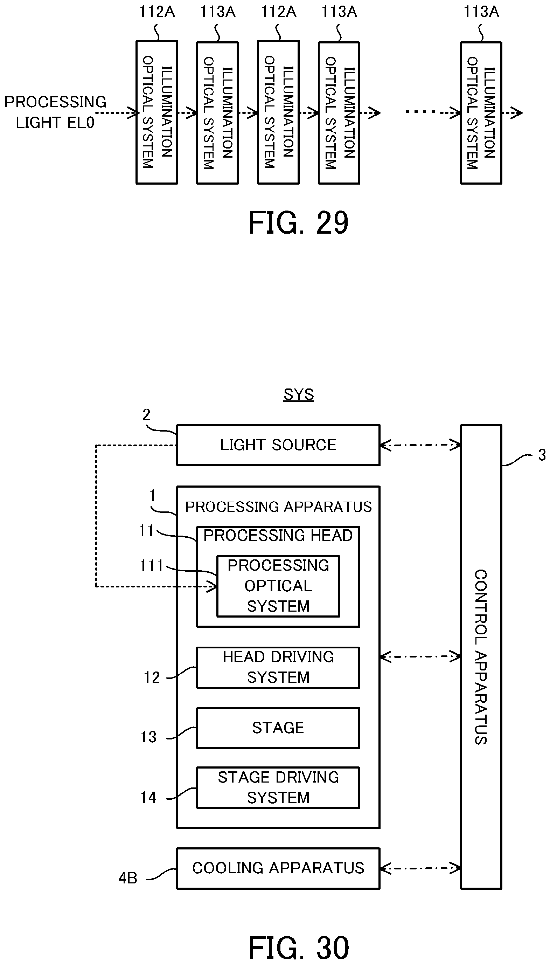

Incidentally, in the above-described description, the processing head 11A includes a single illumination optical unit including the single illumination optical system 112A and the single illumination optical system 113A. However, as illustrated in FIG. 29, the processing head 11A may include a plurality of illumination optical units each of which includes the single illumination optical system 112A and the single illumination optical system 113A. In this case, the processing light EL0 emitted from a first illumination optical unit may enter a second illumination optical unit that is different from the first illumination optical unit. Namely, a conversion of the intensity of the processing light EL0 using the illumination optical systems 112A and 113A may be performed a plurality of number of times. In this case, there is a higher possibility that the intensity distribution of the processing light EL0 entering the processing optical system 111 is an ideal flat shape.

Moreover, in the first modified example, the processing system SYSA may process the workpiece W without forming the interference fringe IS. The processing system SYSA may not provide the difference in optical characteristic between at least two of the plurality of processing lights EL 1.

### (3-2) Second Modified Example of Processing System SYS

Next, with reference to FIG. 30, a second modified example of the processing system SYS will be described. FIG. 30 is a system configuration diagram that illustrates a system configuration of the second modified example of the processing system SYS. In the below-described description, the second modified example of the processing system SYS is referred to as a "processing system SYSB".

As illustrated in FIG. 30, the processing system SYSB in the second modified example is different from the above-described processing system SYS (alternatively, the above-described processing system SYSA) in that it includes a cooling apparatus 4B. Other feature of the processing system SYSB may be the same as other feature of the processing system SYS (alternatively, the above-described processing system SYSA).

The cooling apparatus 4B is configured to cool an object that is a processing target. For example, the cooling apparatus 4B may be configured to cool the processing optical system 111. For example, the cooling apparatus 4B may be configured to cool at least one of the beam splitter 1111a, the mirror 1112a, the mirror 1113a, the polarization beam splitter 1114a, the wave plate 1115a, the wave plate 1116a, the wave plate 1117a, the intensity adjustment element 1118a, and the intensity adjustment element 1119a of the above-described processing optical system 111a. For example, the cooling apparatus 4B may be configured to cool at least one of the beam splitter 1111b, the beam splitter 1112b, the beam splitter 1113b, the mirror 1114b, and the mirror 1115b of the above-described processing optical system 111b. For example, the cooling apparatus 4B may be configured to cool at least one of the beam splitter 1111c, the mirror 1112c, the mirror 1113c, the polarization adjustment optical system 1114c, and the polarization adjustment optical system 1115c of the above-described processing optical system 111c. As a result, there is a lower possibility that an operational failure due to heat generation in the processing optical system 111 occurs.

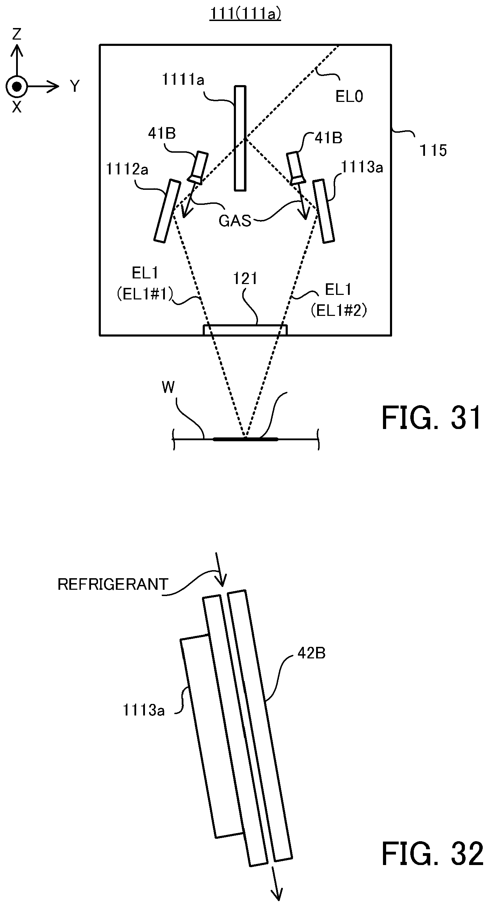

The cooling apparatus 4B may be configured to cool the processing optical system 111 by using gas as a refrigerant. One example of the cooling apparatus 4B that uses the gas as the refrigerant is illustrated in FIG. 31. As illustrated in FIG. 31, the cooling apparatus 4B may include a gas supply pipe 41B. The cooling apparatus 4B may supply the gas as the refrigerant from the gas supply pipe 41B toward the object that is a cooling target. The cooling apparatus 4B may supply the gas as the refrigerant from the gas supply pipe 41B toward a space around the object that is the cooling target. As a result, the object that is the cooling target is cooled by the gas supplied from the gas supply pipe 41B. The gas used as the refrigerant may include inert gas. The inert gas may include at least one of nitrogen gas and argon gas, for example.

The cooling apparatus 4B may supply the gas as the refrigerant from the gas supply pipe 41B to the object that is the cooling target in housing 15 containing the processing optical system 111. Incidentally, a protective window 121 through which the processing light EL1 emitted from the processing optical system 111 is allowed to pass may be formed at the housing 15.

Note that the gas supply pipe 41B may supply liquid as the refrigerant to the object that is the cooling target, in addition to or instead of the gas. Namely, the cooling apparatus 4B including the gas supply pipe 41B may serve as a cooling apparatus that uses the liquid as the refrigerant. In this case, the gas supply pipe 41B may be referred to as a liquid supply pipe.

The cooling apparatus 4B may cool the processing optical system 111 by using the liquid as the refrigerant. Onn example of the cooling apparatus 4B that uses the liquid as the refrigerant is illustrated in FIG. 32. As illustrated in FIG. 32, the cooling apparatus 4B may include a water cooling pipe 42B. A flow path through which the liquid flows as the refrigerant is formed in the water cooling pipe 42B. The water cooling pipe 42B may be disposed to contact the object that is the cooling target. The water cooling pipe 42B may be disposed in a space around the object that is the cooling target. As a result, the object that is the cooling target is cooled by the liquid flowing in the water cooling pipe 42B. The liquid used as the refrigerant may include at least one of water and oil.

Incidentally, the gas may flow as the refrigerant in the flow path of the water cooling pipe 42B, in addition to or instead of the liquid. Namely, the cooling apparatus 4B including the water cooling pipe 42B may serve as the cooling apparatus that uses the gas as the refrigerant. In this case, the water cooling pipe 42B may be referred to as an air cooling pipe.

Moreover, in the second modified example, the processing system SYSB may process the workpiece W without forming the interference fringe IS. The processing system SYSB may not provide the difference in optical characteristic between at least two of the plurality of processing lights EL1.

### (3-3) Other Modified Example

A range of a wavelength width of the processing light source 2 (namely, a range of a wavelength width of the processing light EL0 emitted by the processing light source 2) may be a narrow-bandwidth. In this case, the interference area IA in which the processing apparatus 1 forms the interference fringe IS on the workpiece W is larger, compared to a case where the range of the wavelength width of the processing light source 2 is not the narrow-bandwidth.

In the above-described description, the processing apparatus 1 includes the head driving system 12. However, the processing apparatus 1 may not include the head driving system 12. Namely, the processing head 11 may not be movable. Moreover, in the above-described description, the processing apparatus 1 includes the stage driving system 14. However, the processing apparatus 1 may not include the stage driving system 14. Namely, the stage 13 may not be movable. Alternatively, the processing apparatus 1 may not include the stage 13.

In the above-described description, the example in which the processing apparatus 1 forms the riblet structure RB on the metallic workpiece W (namely, the base member) and the example in which the processing apparatus 1 forms the riblet structure RB on a coat coating the surface of the workpiece W are described. However, the processing performed by processing apparatus 1 is not limited to the examples described above. For example, the processing apparatus 1 may form the riblet structure RB on the surface of the workpiece W, and the surface of the workpiece W on which the riblet structure RB has been formed may be coated with a coat. For example, in a case where the processing apparatus 1 forms the riblet structure RB on the coat coating on the surface of the workpiece W, the coat on which the riblet structure RB has been formed may be further coated with another coat. In both examples, the riblet structure RB may be coated with the coat. In this case, a thickness of the coat may be determined so that the function of the riblet structure RB is not reduced by the coat coating the riblet structure RB. For example, the thickness of the coat may be determined so that the riblet structure RB is not buried in the coat, because there is a possibility that the function of the riblet structure RB is reduced by the coat in a case where the riblet structure RB is buried in the coat. The coat may be formed along the shape of the riblet structure RB (for example, along the convex structure 81 or the groove structure 82) so that the function of the riblet structure RB is not reduced by the coat coating the riblet structure RB.

The processing apparatus 1 may perform an additive manufacturing to add a new structural object to the workpiece W by irradiating the workpiece W with the processing light EL, in addition to or instead of the removal processing. In this case, the processing apparatus 1 may form the above-described riblet structure RB on the surface of the workpiece W by performing the additive manufacturing. Alternatively, the processing apparatus 1 may perform a machining-processing for processing the workpiece W by contacting the workpiece W with a tool, in addition to or instead of at least one of the removal processing and the additive manufacturing. In this case, the processing apparatus 1 may form the above-described riblet structure RB on the surface of the workpiece W by performing the machining-processing.

In the above-described description, the processing system SYS forms the riblet structure RB that has the function of reducing the resistance of the surface of the workpiece W to the fluid. However, the processing system SYS may form, on the workpiece W, a structure that has a function different from the function of reducing the resistance of the surface of the workpiece W to the fluid. For example, the processing system SYS may form, on the workpiece W, a riblet structure that reduces noise generated when the fluid and the surface of the workpiece W relative move. For example, the processing system SYS may form, on the workpiece W, a riblet structure that generates swirl relative to the flow of the fluid on the surface of the workpiece W. For example, the processing system SYS may form, on the workpiece W, a structure that provides hydrophobic property to the surface of the workpiece W.

In the above described description, the processing system SYS forms the riblet structure RB on the surface of the workpiece W. However, the processing system SYS may form any structure having any shape on the surface of the workpiece W. A structure that generates a swirl relative to a flow of the fluid on the surface of the workpiece W is one example of any structure. A structure that provides hydrophobic property to the surface of the workpiece W is one example of any structure. A fine texture structure (typically, a concave and convex structure including a land structure and a groove structure) that is formed regularly or irregularly in a micro / nanometer order is one example of any structure. The fine texture structure may include at least one of a shark skin structure or a dimple structure that has a function of reducing a resistance from a fluid (a liquid and / or a gas). The fine texture structure may include a lotus leaf surface structure that has at least one of a liquid repellent function and a self-cleaning function (for example, has a lotus effect). The fine texture structure may include at least one of a fine protrusion structure that has a liquid transporting function (US2017/0044002A1), a concave and convex structure that has a lyophile effect, a concave and convex structure that has an antifouling effect, a moth eye structure that has at least one of a reflectance reduction function and a liquid repellent function, a concave and convex structure that intensifies only light of a specific wavelength by interference to have a structural color, a pillar array structure that has an adhesion function using van der Waals force, a concave and convex structure that has an aerodynamic noise reduction function, a honeycomb structure that has a droplet collection function, a concave and convex structure that improves an adherence to a layer formed on a surface, a concave and convex structure for reducing a friction resistance, and so on. Even in this case, the convex structure included in the concave and convex structure may have a structure that is same as that of the convex structure 81 included in the riblet structure RB described above. The groove structure included in the concave and convex structure may have a structure that is same as that of the groove structure 82 included in the riblet structure RB described above. Note that the fine texture structure may not have any function.

In the above-described description, the processing system SYS forms the riblet structure RB on the surface of the workpiece W. However, the processing system SYS may form a mold for transfer-printing the riblet structure RB to the surface of the workpiece W. In this case, the workpiece W may be a surface of the movable object or may be a film that is allowed to be pasted in the movable object.

In the above described description, the processing system SYS processes the workpiece W by irradiating the workpiece W with the processing lights EL. However, the processing system SYS may process the workpiece W by irradiating the workpiece W with any energy beam that is different from the light. In this case, the processing system SYS may include a beam irradiation apparatus that is configured to emit any energy beam in addition to or instead of the processing light source 2. At least one of a charged particle beam, an electromagnetic wave and the like is one example of any energy beam. A least one of an electron beam, an ion beam and the like is one example of the charged particle beam.

### (4) Supplementary Note

Regarding the above described example embodiment, below described Supplementary notes are further disclosed.

### [Supplementary Note 1]

A processing apparatus that performs a riblet processing on a surface of an object by using light from a light source,
the processing apparatus comprising:
a first optical system that forms an interference fringe on the surface of the object by irradiating the object with a plurality of processing lights, which are generated by dividing the light from the light source, from different incident directions, respectively; and
a second optical system that adjusts a shape of a riblet, which is formed on the surface of the object, by providing a difference in intensity between at least two processing lights, with which the object is irradiated, among the plurality of processing lights.

### [Supplementary Note 2]

A processing apparatus that performs a riblet processing on a surface of an object by using light from a light source,
the processing apparatus comprising:
a first optical system that forms an interference fringe on the surface of the object by irradiating the object with a plurality of processing lights, which are generated by dividing the light from the light source, from different incident directions, respectively; and
a second optical system that adjusts a shape of a riblet, which is formed on the surface of the object, by providing a difference in phase between at least two processing lights, with which the object is irradiated, among the plurality of processing lights.

### [Supplementary Note 3]

A processing apparatus that performs a riblet processing on a surface of an object by using light from a light source,
the processing apparatus comprising:
a first optical system that forms an interference fringe on the surface of the object by irradiating the object with a plurality of processing lights, which are generated by dividing the light from the light source, from different incident directions, respectively; and
a second optical system that adjusts a shape of a riblet, which is formed on the surface of the object, by providing a difference in polarization between at least two processing lights, with which the object is irradiated, among the plurality of processing lights.

### [Supplementary Note 4]

A processing apparatus that processes a surface of an object by using light from a light source,
the processing apparatus comprising:
an interference optical system that forms an interference fringe on the surface of the object by irradiating the object with a plurality of processing lights, which are generated by dividing the light from the light source, from different incident directions, respectively; and
an adjustment optical system that adjusts a wave parameter of at least one of at least two processing lights so that the wave parameters of the processing lights are different from each other between the at least two processing lights, with which the object is irradiated, among the plurality of processing lights.

### [Supplementary Note 5]

The processing apparatus according to the Supplementary Note 4, wherein
the interference fringe is formed by interference light generated by an interference between the plurality of processing lights,
the adjustment optical system adjusts the wave parameter of at least one of the at least two processing lights so that the wave parameters are different from each other between the at least two processing lights and thereby a minimum fluence in a fluence distribution of the interference light on the surface of the object is equal to or higher than a desired value.

### [Supplementary Note 6]

The processing apparatus according to the Supplementary Note 5, wherein
the object has a characteristic that a first relationship between a fluence and a processed amount in a case where the fluence of the interference light is lower than a predetermined threshold value is different from a second relationship between the fluence and the processed amount in a case where the fluence of the interference light is higher than the predetermined threshold value,
the desired value is set based on the predetermined threshold value.

### [Supplementary Note 7]

The processing apparatus according to any one of the Supplementary Notes 4 to 6, wherein
the wave parameter includes an amplitude of the processing light corresponding to an intensity of the processing light.

### [Supplementary Note 8]

The processing apparatus according to the Supplementary Note 7 further includes a dividing optical system that generates the plurality of processing lights by dividing the light from the light source, wherein
the adjustment optical system includes the dividing optical system.

### [Supplementary Note 9]

The processing apparatus according to the Supplementary Note 8, wherein
the dividing optical system includes an amplitude-dividing-type of beam splitter.

### [Supplementary Note 10]

The processing apparatus according to the Supplementary Note 8 or 9, wherein
the dividing optical system includes a polarization beam splitter,
the adjustment optical system includes a polarization change member that changes a polarization state of the processing light entering the polarization beam splitter.

### [Supplementary Note 11]

The processing apparatus according to any one of the Supplementary Notes 8 to 10, wherein
the adjustment optical system includes an intensity adjustment optical system that is disposed on an optical path of at least one of the at least two processing lights and that is configured to adjust an intensity of at least one of the at least two processing lights.

### [Supplementary Note 12]

The processing apparatus according to any one of the Supplementary Notes 4 to 11, wherein
the wave parameter includes a phase of the processing light.

### [Supplementary Note 13]

The processing apparatus according to the Supplementary Note 12, wherein
the at least two processing lights includes: first processing light that enters the surface of the object at a first incident angle from a first incident direction; and second processing light that enters the surface of the object at a second incident angle that is different from the first incident angle from a second incident direction that is different from the first incident direction,
the adjustment optical system adjusts the phase of at least one of the first and second processing lights so that the phase of the first processing light is different from the phase of the second processing light.

### [Supplementary Note 14]

The processing apparatus according to the Supplementary Note 13, wherein
the at least two processing lights includes: third processing light that enters the surface of the object at the second incident angle from a third incident direction that is different from the first to second incident directions,
the adjustment optical system adjusts the phase of at least one of the first to third processing lights so that the phase of the first processing light is different from the phase of each of the second and third processing lights.

### [Supplementary Note 15]

The processing apparatus according to the Supplementary Note 14, wherein
the at least two processing lights includes: fourth processing light that enters the surface of the object at the first incident angle from a fourth incident direction that is different from the first to third incident directions,
the adjustment optical system adjusts the phase of at least one of the first to fourth processing lights so that the phase of each of the first and fourth processing lights is different from the phase of each of the second and third processing lights.

### [Supplementary Note 16]

The processing apparatus according to any one of the Supplementary Notes 12 to 15, wherein
the adjustment optical system includes a phase adjustment optical system that is disposed on an optical path of at least one of the at least two processing lights and that is configured to adjust a phase of at least one of the at least two processing lights.

### [Supplementary Note 17]

The processing apparatus according to the Supplementary Note 16, wherein
the phase adjustment optical system is configured to adjust the phase of at least one of the at least two processing lights by adjusting an optical path length of at least one of the at least two processing lights.

### [Supplementary Note 18]

The processing apparatus according to any one of the Supplementary Notes 4 to 17, wherein
the wave parameter includes a polarization state of the processing light.

### [Supplementary Note 19]

The processing apparatus according to the Supplementary Note 18, wherein
the at least two processing lights includes: fifth processing light that is elliptically polarized light entering the surface of the object at a third incident angle from a fifth incident direction; and sixth processing light that is elliptically polarized light and that enters the surface of the object at the third incident angle from a sixth incident direction that is different from the fifth incident direction,
the adjustment optical system adjusts the polarization state of at least one of the fifth and sixth processing lights so that a rotational direction of the fifth processing light is different from a rotational direction of the sixth processing light in a plane intersecting the fifth processing light and a direction of a major axis of an ellipse representing a trajectory of an end point of an electromagnetic field vector of the fifth processing light is the same as a direction of a major axis of an ellipse representing a trajectory of an end point of an electromagnetic field vector of the sixth processing light in a plane intersecting the fifth and sixth processing lights.

### [Supplementary Note 20]

The processing apparatus according to the Supplementary Note 18 or 19, wherein
the at least two processing lights includes: seventh processing light that is linearly polarized light entering the surface of the object at a fourth incident angle from a seventh incident direction; and eighth processing light that is linearly polarized light and that enters the surface of the object at the fourth incident angle from an eighth incident direction that is different from the seventh incident direction,
the adjustment optical system adjusts the polarization state of at least one of the at least two processing lights so that a direction of a line segment representing a trajectory of an end point of an electromagnetic field vector of the seventh processing light is not parallel to a direction of a line segment representing a trajectory of an end point of an electromagnetic field vector of the eighth processing light in a plane intersecting the seventh and eighth processing lights.

### [Supplementary Note 21]

The processing apparatus according to any one of the Supplementary Notes 18 to 20, wherein
the at least two processing lights includes: ninth processing light that is elliptically polarized light entering the surface of the object at a fifth incident angle from a ninth incident direction; and tenth processing light that is elliptically polarized light and that enters the surface of the object at the fifth incident angle from a tenth incident direction that is different from the ninth incident direction,
the adjustment optical system adjusts the polarization state of at least one of the ninth and tenth processing lights so that a rotational direction of the ninth processing light is the same as a rotational direction of the tenth processing light and a direction of a major axis of an ellipse representing a trajectory of an end point of an electromagnetic field vector of the ninth processing light is not parallel to a direction of a major axis of an ellipse representing a trajectory of an end point of an electromagnetic field vector of the tenth processing light in a plane intersecting the ninth and tenth processing lights.

### [Supplementary Note 22]

The processing apparatus according to any one of the Supplementary Notes 18 to 21, wherein
the adjustment optical system includes a polarization adjustment optical system that is disposed on an optical path of at least one of the at least two processing lights and that is configured to adjust a polarization state of at least one of the at least two processing lights.

### [Supplementary Note 23]

The processing apparatus according to the Supplementary Note 22, wherein
the polarization adjustment optical system includes a wave plate.

### [Supplementary Note 24]

The processing apparatus according to any one of the Supplementary Notes 1 to 23, wherein
the light from the light source is pulsed light.

### [Supplementary Note 25]

A processing apparatus that processes a surface of an object by using light from a light source,
the processing apparatus comprising:
a first optical system that forms an interference fringe including a bright part and a dark part on the surface of the object by irradiating the object with a plurality of processing lights, which are generated by dividing the light from the light source, from different incident directions, respectively; and
a second optical system that sets a minimum fluence in the dark part of the interference fringe formed on the surface of the object to be a fluence by which the surface of the object is removable.

### [Supplementary Note 26]

The processing apparatus according to the Supplementary Note 25, wherein
the second optical system adjusts a wave parameter of at least one of the plurality of processing lights so that the minimum fluence is equal to or larger than a desired value.

### [Supplementary Note 27]

The processing apparatus according to the Supplementary Note 26, wherein
the object has a characteristic that a first relationship between a fluence and a processed amount in a case where the fluence of interference light, which is generated by an interference between the plurality of processing lights and forms the interference fringe, is lower than a predetermined threshold value is different from a second relationship between the fluence and the processed amount in a case where the fluence of the interference light is higher than the predetermined threshold value,
a ratio of an increase of the processed amount to an increase of the fluence of the processing light in the second relation is larger than the ratio in the first relation,
the desired value is set based on the predetermined threshold value.

### [Supplementary Note 28]

The processing apparatus according to any one of the Supplementary Notes 25 to 27 forming a concave and convex structure on the surface of the object by using the interference fringe to remove a part of the object.

### [Supplementary Note 29]

The processing apparatus according to the Supplementary Note 28, wherein
a concave part of the concave and convex structure is formed by the processing light reaching the bright part of the interference fringe,
a convex part of the concave and convex structure is formed by the processing light reaching the dark part of the interference fringe.

### [Supplementary Note 30]

The processing apparatus according to the Supplementary Note 29, wherein
a part of the object is removed by the plurality of processing lights reaching the dark part of the interference fringe.

### [Supplementary Note 31]

The processing apparatus according to any one of the Supplementary Notes 25 to 30, wherein
the second optical system makes an intensity of at least one processing light of the plurality of processing lights be different from an intensity of at least another processing light of the plurality of processing lights.

### [Supplementary Note 32]

The processing apparatus according to any one of the Supplementary Notes 25 to 31, wherein
the second optical system provided a difference in phase between at least one processing light of the plurality of processing lights and at least another processing light of the plurality of processing lights.

### [Supplementary Note 33]

The processing apparatus according to the Supplementary Note 32, wherein
the difference in phase is 180 + 360 × n degrees (wherein n is an integer).

### [Supplementary Note 34]

The processing apparatus according to any one of the Supplementary Notes 25 to 33, wherein
the second optical system makes a polarization state of first processing light that is at least one processing light of the plurality of processing lights be different from a polarization state of second processing light that is at least another processing light of the plurality of processing lights different from the at least one processing light.

### [Supplementary Note 35]

The processing apparatus according to the Supplementary Note 34, wherein
at least a part of a polarized light component of the first processing light is orthogonal to at least a part of a polarized light component of the second processing light.

### [Supplementary Note 36]

The processing apparatus according to any one of the Supplementary Notes 25 to 35, wherein
the light from the light source is pulsed light.

### [Supplementary Note 37]

A processing method of processing a surface of an obj ect by using light from a light source, the processing method comprising:
generating a plurality of processing lights by dividing the light from the light source;
irradiating the object with the plurality of processing lights from different incident directions, respectively;
forming an interference fringe on the surface of the object by the plurality of processing lights; and
adjusting a wave parameter of at least one of at least two processing lights so that the wave parameters of the processing lights are different from each other between the at least two processing lights, with which the object is irradiated, among the plurality of processing lights.

### [Supplementary Note 38]

A processing method of processing a surface of an obj ect by using light from a light source,
the processing method comprising:
generating a plurality of processing lights by dividing the light from the light source;
irradiating the object with the plurality of processing lights from different incident directions, respectively;
forming an interference fringe including a bright part and a dark part on the surface of the object on the surface of the object by the plurality of processing lights; and
setting a minimum fluence in the dark part of the interference fringe formed on the surface of the object to be a fluence by which the surface of the object is removable.

The features of each example embodiment described above may be appropriately combined with each other. A part of the features of each example embodiment described above may not be used. The feature of each example embodiment described above may be appropriately replaced with the feature of another example embodiment. Moreover, the disclosures of all publications and United States patents related to an apparatus and the like cited in each embodiment described above are incorporated in the disclosures of the present application by reference if it is legally permitted.

The present invention is not limited to the above described examples and is allowed to be changed, if desired, without departing from the essence or spirit of the invention which can be read from the claims and the entire specification, and a processing apparatus and a processing method, which involve such changes, are also intended to be within the technical scope of the present invention.

### Description of Reference Codes

SYS processing system
1 processing apparatus
11 processing head
111
111a
1111a beam splitter
1112a, 1113a mirror
1114a polarization beam splitter
1115a, 1116a, 1117a wavelength plate
1118a, 1119a intensity adjustment element
111b processing optical system
1111b, 1112b, 1113b beam splitter
1114b, 1115b mirror
111c processing optical system
1111c beam splitter
1112c, 1113c mirror
1114c, 1115c polarization adjustment optical system
W workpiece
IS interference fringe
IL bright part
ID dark part
IA interference area
EL, EL0, EL1 processing light
RB riblet structure
81 convex structure
82 groove structure

## Claims

1. A processing apparatus that performs a riblet processing on a surface of an object by using light from a light source,
the processing apparatus comprising:
a first optical system that forms an interference fringe on the surface of the object by irradiating the object with a plurality of processing lights, which are generated by dividing the light from the light source, from different incident directions, respectively; and
a second optical system that adjusts a shape of a riblet, which is formed on the surface of the object, by providing at least one difference of a difference in intensity, a difference in phase and a difference in polarization between at least two processing lights, with which the object is irradiated, among the plurality of processing lights.

2. The processing apparatus according to claim 1, wherein
the second optical system control the shape of the riblet by changing the at least one difference.

3. The processing apparatus according to claim 1 or 2, wherein
the second optical system sets a minimum fluence in a dark part of the interference fringe formed on the surface of the object to be a fluence by which the surface of the object is removable by adjusting the at least one difference.

4. The processing apparatus according to any one of claims 1 to 3, wherein
the object has a characteristic that a first relationship between a fluence and a processed amount in a case where the fluence of each processing light is lower than a predetermined threshold value is different from a second relationship between the fluence and the processed amount in a case where the fluence of each processing light is higher than the predetermined threshold value,
a ratio of an increase of the processed amount to an increase of the fluence of the processing light in the second relation is larger than a ratio of an increase of the processed amount to an increase of the fluence of the processing light in the first relation,
the second optical system sets the at least one difference so that a minimum fluence of the processing light reaching a dark part of the interference fringe is equal to or higher than the predetermined threshold value.

5. The processing apparatus according to claim 4, wherein
a concave part of the riblet is formed by a processing with a bright part of the interference fringe,
a convex part of the riblet is formed by a processing with a dark part of the interference fringe.

6. The processing apparatus according to any one of claims 1 to 5, wherein
an ablation processing is performed on the object by the at least two processing lights from the second optical system.

7. The processing apparatus according to any one of claims 1 to 6, wherein
the second optical system generates the plurality of processing lights by diving the light from the light source,
the plurality of processing lights generated by the second optical system enters the first optical system.

8. The processing apparatus according to claim 7, wherein
the second optical system changes at least one difference of the difference in intensity, the difference in phase and the difference in polarization provided between the at least two processing lights among the plurality of processing lights in generating the plurality of processing lights by diving the light from the light source.

9. The processing apparatus according to any one of claims 1 to 8, wherein
the second optical system includes an intensity adjustment member that is configured to adjust an intensity of at least one of the at least two processing lights.

10. The processing apparatus according to claim 9, wherein
the intensity adjustment member is configured to change an adjustment degree of the intensity of at least one of the at least two processing lights.

11. The processing apparatus according to any one of claims 1 to 10, wherein
the second optical system includes a phase adjustment member that is configured to adjust a phase of at least one of the at least two processing lights.

12. The processing apparatus according to claim 11, wherein
the phase adjustment member is configured to change an adjustment degree of the phase of at least one of the at least two processing lights.

13. The processing apparatus according to any one of claims 1 to 12, wherein
the second optical system includes a polarization adjustment member that is configured to adjust a polarization state of at least one of the at least two processing lights.

14. The processing apparatus according to claim 13, wherein
the polarization adjustment member is configured to change an adjustment degree of the polarization state of at least one of the at least two processing lights.

15. A processing method of performing a riblet processing on a surface of an object by using light from a light source,
the processing method comprising:
generating a plurality of processing lights by dividing the light from the light source;
irradiating the object with the plurality of processing lights from different incident directions, respectively;
forming an interference fringe on the surface of the object; and
adjusting a shape of a riblet, which is formed on the surface of the object, by providing at least one difference of a difference in intensity, a difference in phase and a difference in polarization between at least two processing lights, with which the object is irradiated, among the plurality of processing lights.
